(19) Europäisches Patentamt
European Patent Office
Office européen des brevets

(11) **EP 1 729 223 A2**

(12) **EUROPEAN PATENT APPLICATION**

(43) Date of publication:
06.12.2006 Bulletin 2006/49

(51) Int Cl.:
*G06F 17/00* (2006.01)  *H02J 3/00* (2006.01)

(21) Application number: 06101343.9

(22) Date of filing: 06.02.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 01.06.2005 JP 2005161352
06.07.2005 JP 2005197048

(71) Applicant: SANYO ELECTRIC CO., LTD.
Moriguchi-City, Osaka 570-8677 (JP)

(72) Inventors:
• Nakajima, Hideki
c/o Sanyo Electric Co. LTD.
Moriguchi City,
Osaka 570-8677 (JP)

• Kawaai, Tsuyoshi
c/o Sanyo Electric Co. LTD.
Moriguchi City,
Osaka 570-8677 (JP)
• Itoh, Kazuo
c/o Sanyo Electric Co. LTD.
Moriguchi City,
Osaka 570-8677 (JP)
• Fujihara, Tadato
c/o Sanyo Electric Co. LTD.
Moriguchi City,
Osaka 570-8677 (JP)

(74) Representative: Walaski, Jan Filip et al
Venner Shipley LLP
20 Little Britain
London EC1A 7DH (GB)

(54) **Demand control apparatus, electric power consumption prediction method, and program therefor**

(57) A history record of, for example, the relationship between the operation state of a main load appliance and the amount of electric power consumed at that time is stored in an information table, and later, when the amount of electric power expected to be consumed is predicted, by using that information table, it is predicted with high accuracy. Specifically, the history position corresponding to the operation state of the load appliance at the current moment is identified in the information table, and, by adding the amount of electric power actually consumed as stored in the information table thereafter, the predicted amount of electric power expected to be consumed is calculated.

FIG.3

**Description**

**BACKGROUND OF THE INVENTION**

1. Field of the Invention

The present invention relates to a demand control apparatus, an electric power consumption prediction method suitable for use therein, and a program therefor.

2. Description of Related Art

When signing a contract with an electric power supplier, an electric power user can choose to enter into a demand-based contract. In a demand-based contract, the amount of electric power to be supplied according to the contract (the contracted electric power amount) is set in light of a demand value. A demand value denotes, with respect to the amount of electric power demanded (the demanded electric power amount) during a given unit of time (for example, one month), the maximum value thereof among those calculated for every 30 minutes' time span by an electric power demand meter (demand meter). A demand meter can store and keep updated the maximum value of the demanded electric power amount.

As part of the charge to be paid to the electric power supplier, a basic charge is calculated on the basis of the contracted electric power amount, which in turn is determined in light of the past demand value. The contracted electric power amount is set as an upper limit value below which the electric power user is entitled to consume electric power for every 30 minutes' time span. If, even only once in a given month, the demanded electric power amount exceeds the contracted electric power amount, the contracted electric power amount is updated upward readily starting with the next month, and no downward updating takes place even if the demanded electric power amount does not actually exceed the contracted electric power amount that month. The updated (raised) charge will then remain valid for the twelve months starting with that month.

As described above, in a demand-based contract, the demanded electric power amount is monitored for every 30 minutes' time span, and then, on the basis of the maximum value (that is, the demand value) thereof among those measured during a given unit of time (for example, one month), the contracted electric power amount is calculated as a basis on which to calculate the basic charge. This is the reason that there have been demands for control (demand control) whereby the demanded electric power amount for every 30 minutes' time span is so controlled as to always remain within the contracted electric power amount.

To meet the requirement, there have been used demand control apparatuses. A demand control apparatus operates as follows. Within every 30 minutes' time span mentioned above set for the contracted electric power amount, the amount of electric power consumed by load appliances as a whole (for example, air conditioners, refrigerator/freezer showcases, and illuminations) up to the moment is acquired from a demand meter, and, at that moment, the amount of electric power that can still be used out of the contracted electric power amount during the rest (for example, 10 minutes) of the time span is calculated. On the other hand, at the same moment, the predicted value of the amount of electric power that is expected to be consumed by the load appliances as a whole during the rest of the time span is calculated. Then the still usable electric power amount and the predicted consumed electric power amount thus calculated are compared. Here, if the predicted consumed electric power amount is likely to exceed the still usable electric power amount, an instruction is fed to, for example, air conditioners to stop their cooling, heating, ventilating, or other operation, thereby to reduce the amount of electric power being used. In this way, within one time span for the contracted electric power amount after the next, the demand control apparatus, while repeatedly calculating the still usable electric power amount and the predicted consumed electric power amount, restricts or controls the operation of the individual load appliances so that the demanded electric power amount does not exceed the contracted electric power amount.

Examples of such demand control apparatuses are disclosed, for example, in Japanese Patent Application Laid-open No. H7-143670.

As the method for calculating the predicted amount of electric power that is expected to be consumed by the load appliances as a whole during the rest of the time span, a method has been known that linearly predicts the amount on the basis of the variation in the amount of consumed electric power observed during a very short period at the moment. This method will now be described with reference to the relevant drawing.

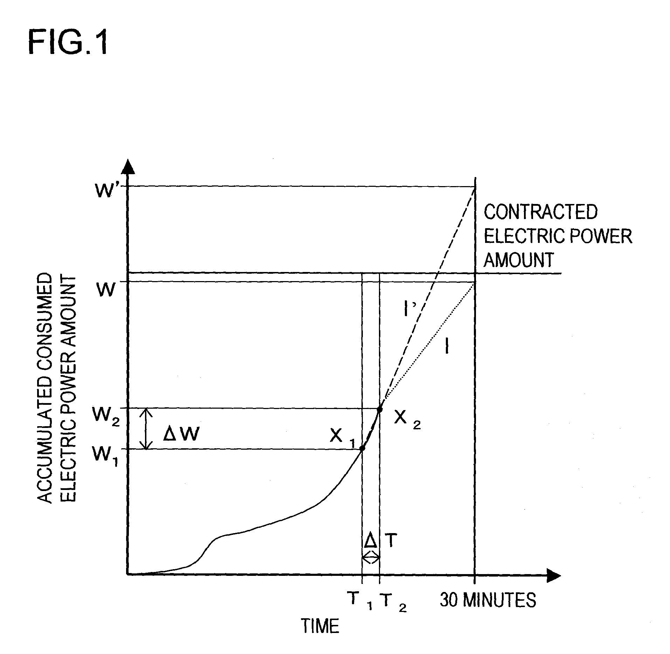

Fig. 1 shows how the electric power consumption for a given 30 minutes' time span is linearly predicted. In Fig. 1, the horizontal axis represents time, and the vertical axis represents the accumulated amount of consumed electric power. The solid-line part of the graph indicates the amount of electric power consumed up to a given moment $T_2$. The accumulated amount of consumed electric power is reset to zero every 30 minutes. Let T represent the lapse of time after resetting. At the moment $T_2$, while with respect to the contracted electric power amount for that 30 minutes' time span the amount of electric power still usable during the rest of the time span is calculated and the amount of electric power expected to be consumed during the same period is predicted, the operation of individual load appliances is restricted or controlled so that the contracted electric power amount is not exceeded.

The amount of electric power expected to be consumed is predicted on the basis of the electric power amount difference $\Delta W$ (= $W_2$ - $W_1$) between the accumulated consumed electric power amount $W_2$ (indicated by a point $X_2$ on the graph) measured at the moment $T_2$ and the accumulated consumed electric power amount $W_1$ (indicated by a point $X_1$ on the graph) measured at the moment $T_1$ a very short period $\Delta T$ before the moment $T_2$. That is, on the basis of the electric power amount difference $\Delta W$, the accumulated consumed electric power amount at T = 30 minutes is predicted. Specifically, on the basis of the straight line 1' (the broken-line part of the graph) that links the points $X_1$ and $X_2$, the expected consumed electric power amount (expected accumulated consumed electric power amount) W' at T = 30 minutes is calculated. That is, on the assumption that the amount of electric power consumed after the moment $T_2$ per $\Delta T$ is $\Delta W$, the accumulated consumed electric power amount W' at the end of the 30 minutes' time span is predicted. Incidentally, the gradient of the straight line 1' is ($\Delta W$ / $\Delta T$).

Here, if the predicted consumed electric power amount W' exceeds the contracted electric power amount, the operation of the load appliances is restricted to reduce the amount of electric power consumed, so as to achieve control such that the accumulated consumed electric power amount at the end of the 30 minutes' time span does not exceed the contracted electric power amount. In Fig. 1, the straight line 1 (the broken-line part of the graph) indicates the predicted consumed electric power amount expected when the amount of electric power consumed is so restricted. That is, control is achieved such that the predicted consumed electric power amount (predicted accumulated consumed electric power amount) W at T = 30 minutes does not exceed the contracted electric power amount.

This prior-art technique, however, suffers from the following disadvantages. As the method for calculating the predicted amount of electric power that is expected to be consumed by the load appliances as a whole during the rest of the time span, a method is adopted that predicts the amount solely on the basis of the variation in the amount of consumed electric power observed during a very short period at the moment. Thus if, for example, a load appliance is operating that consumes a difficult-to-predict amount of electric power, an erroneous prediction may be made, leaving a very small amount of electric power usable during the rest of the time span. When this happens, a situation may arise in which the operation of most of the load appliances needs to be stopped. This is quite inconvenient because stopping the operation of, for example, a refrigerator/freezer showcase may degrade the quality of foods stored therein.

On the other hand, if the variation in the amount of consumed electric power observed during a very short period at a given moment is large, the demand control apparatus may predict that the consumed electric power amount will exceed the contracted electric power amount within that time span. In this case, the demand control apparatus so controls as to stop the operation of relevant load appliances. In reality, however, the consumed electric power amount may turn out to be smaller than predicted even if the operation of the load appliances were continued instead of being stopped, and eventually the contracted electric power amount may never be exceeded within that time span even if the operation of the load appliances were not stopped. That is, quite inconveniently, with the prior-art technique, the operation of load appliances may be stopped unnecessarily, even for a short period.

## SUMMARY OF THE INVENTION

To avoid the conventionally experienced inconveniences discussed above, it is an object of the present invention to provide a demand control apparatus that can accurately predict the amount of electric power expected to be consumed within a given time span (unit period) and that can thereby smoothly control appliances without exceeding the amount of electric power contracted to be available, to provide an electric power consumption prediction method for use therein, and to provide a program therefor.

More specifically, an object of the present invention is to provide a demand control apparatus that can accurately predict the amount of electric power expected to be consumed within a given time span by using a history record of the relationship between the operation state of a load appliance and the amount of electric power consumed at that time, to provide an electric power consumption prediction method for use therein, and to provide a program therefor.

To achieve the above object, a first demand control apparatus according to the present invention is configured as follows: a demand control apparatus for controlling a load appliance based on a predicted consumed electric power amount thereof, which is the amount of electric power expected to be consumed by the load appliance until the end of a unit period, is characterized in that said demand control apparatus includes: table generating means for generating an information table relating to a history record of an actually consumed electric power amount, which is the amount of electric power actually consumed in a unit targeted by demand control; and prediction calculating means for calculating said predicted consumed electric power amount by using the information table generated by the table generating means.

In the first demand control apparatus described above, for example, said table generating means includes storing means for storing in said information table, as a history record, the relationship between the operation state of, among the load appliances within said targeted unit, a previously selected load appliance and the actually consumed electric power amount in said targeted unit observed at that time, and said prediction calculating means includes calculating means for identifying, in said information table, the history position corresponding to the operation state of said previously selected load appliance at the current moment and then calculating, based on said actually consumed electric power amount acquired from said information table following the identified history position, said predicted consumed electric power amount.

If the operation state of a load appliance at a given past moment is the same as that at the current moment, the behavior of the load appliance thereafter is highly likely to take a similar course to that after the given past moment, and so is the change of the electric power consumption of the load appliance. That is, if the operation state of a load appliance at the current moment agrees with that at a given past moment, the change of the operation state after the current moment is highly likely to take a similar course to the history record thereof after the given past moment. Accordingly, by predicting the electric power consumption expected after the current moment based on the actual electric power consumption recorded in the history record after the given past moment, it is possible to increase the accuracy of the predicted electric power consumption. Thus, as described above, by storing a history record in the information table, and calculating a predicted consumed electric power amount based on a consumed electric power amount acquired from the information table, it is possible to highly accurately predict the amount of electric power consumed by load appliances as a whole.

In the first demand control apparatus described above, for example, said storing means stores in the information table, as information for identifying said history position, time information in association with said operation state and the actually consumed electric power amount at that time, and said calculating means, if a plurality of history positions corresponding to the operation state of said previously selected load appliance at the current moment are identified in said information table, selects, among the plurality of history positions, a history position at the moment closest to the current moment as the history position to be identified during the calculation of said predicted consumed electric power amount.

With a load appliance that requires settings to be made with respect to the operation and the like thereof, it is highly likely that such settings remain the same every day. That is, it is highly likely that the operation state of the load appliance is the same at about the same time every day. Thus, in the history record, it is highly likely that points exist where the operation state agree at about the same time every day, and furthermore that history positions exist after which the change of the operation state quite agrees. Accordingly, as described above, by storing, in the information table, time information as well so that, when a plurality of history positions corresponding to the operation state of the load appliance at the current moment are identified, the history position at the moment closest to the current moment is selected, it is possible to further increase the accuracy with which the amount of electric power consumed by load appliances as a whole is predicted.

In the first demand control apparatus described above, for example, if no history position corresponding to the operation state of said previously selected load appliance at the current moment exists in said information table, said calculating means calculates said predicted consumed electric power amount through linear prediction based on the difference between said actually consumed electric power amount acquired immediately previously and said actually consumed electric power amount acquired at the current moment.

As described above, if no operation state corresponding to the operation state of a load appliance at the current moment exists in the history record, the predicted consumed electric power amount is calculated based on a predicted value calculated through linear prediction by using information relating to the difference between the consumed electric power amount acquired immediately previously and the consumed electric power amount at the current moment. That is, if no operation state that agrees with the operation state of a load appliance at the current moment exists in the history record, the function of the demand control apparatus is complemented with linear prediction. Moreover, immediately after the start of use, and thus only a small number of history records have been accumulated, while the predicted consumed electric power amount is calculated through linear prediction, history records continue to be accumulated. As time passes, more and more history records come to be used to increase the accuracy of prediction. In this process, the linear prediction mentioned above proves to be very useful.

In the first demand control apparatus described above, for example, only if said actually consumed electric power amount falls within a predetermined range with respect to the average value of the consumed electric power amount in said information table, said storing means stores in said information table that actually consumed electric power amount in association with said operation state.

The first demand control apparatus described above predicts the consumed electric power amount with high accuracy by using a history record. Thus, if exceptional information is mixed in the history record, when predicting a future consumed electric power amount, if that position is referred to, a highly influential error may arise. To prevent this, as described above, only if the consumed electric power amount falls within a predetermined range with respect to the average value of the consumed electric power amount in the information table, that consumed electric power amount is stored in the information table in association with the operation state of the load appliance. This helps exclude exceptional information, and is thus very helpful.

In the first demand control apparatus described above, for example, if said previously selected load appliance includes a refrigerator/freezer showcase, what is performed by said storing means includes storing in said information table, as a history record, the relationship between the operation state of the refrigerator/freezer showcase with respect to the defrosting and cooling operation thereof and said actually consumed electric power amount.

In the first demand control apparatus described above, for example, if said previously selected load appliance includes an air conditioner, what is performed by said storing means includes storing in said information table, as a history record, the relationship between the operation state of the air conditioner with respect to the presence/absence and strength of the operation thereof and said actually consumed electric power amount.

In the first demand control apparatus described above, for example, said storing means stores in said information table, in combination with said relationship, the difference between the interior temperature and the set temperature of the refrigerator/freezer showcase at that time.

A load appliance that is likely to consume a large amount of electric power is most likely to influence the consumed electric power amount. Accordingly, with the configuration described above, the operation state of such a load appliance as is most highly likely to influence the consumed electric power amount is stored, as a history record, in the information table.

With respect to a refrigerator/freezer showcase, in many cases, a large number of refrigerator/freezer showcases are connected to a single refrigerator unit/condenser. Therefore, if the change of the amount of electric power consumed by the refrigerator/freezer showcases is predicted by simple theoretical calculations, the accuracy of prediction is extremely low, and increasing the accuracy requires extensive calculations. Thus, it is very advantageous to use an information table in which, as a history record, the relationship of the operation states of the refrigerator/freezer showcases and the consumed electric power amount is stored. Moreover, with a refrigerator/freezer showcase, if the interior temperature thereof differs from the set temperature, even when the refrigerator/freezer showcase is in the same state in other respects, the consumed electric power amount and behavior thereof are highly likely to change. This, therefore, is also stored as a history record.

In the first demand control apparatus described above, for example, in said information table are stored, in association with one another, the operation state of, among the load appliances within said targeted unit, a previously selected load appliance, a first reference value, which is the average value of the increase in the actually consumed electric power amount in said targeted unit at that time, and/or a second reference value, which is greater than the first reference value, and said prediction calculating means checks whether or not an operation state identical with the operation state of said previously selected load appliance at the current moment exists in said information table so that, if so, calculates said predicted consumed electric power amount based on said first or second reference value corresponding to that operation state.

Even when the operation state of, among the load appliances within the targeted unit, the previously selected one, that is, the one whose operation state (how it is being driven) is being monitored, is the same, under the influence of the operation states of the other load appliances, the increase in the actually consumed electric power amount per predetermined unit time in the targeted unit may vary. Accordingly, the first reference value, which is the average value of that increase, may also vary. Thus, the predicted consumed electric power amount calculated based on the first reference value, though highly accurate, may vary.

For example, when the second reference value is so set that the predicted consumed electric power amount calculated thereon always exceeds the actually consumed electric power amount, when the predicted consumed electric power amount is calculated, for example according to the current situation such as the period remaining until the end of a unit period, whether to use the first or second reference value can be chosen. As a result, it is possible to calculate a predicted consumed electric power amount properly according to the current situation, and to perform, based thereon, demand control such that the contracted electric power amount is not exceeded. Incidentally, examples of the first reference value mentioned above include the average value, median value, mode value, and distribution value of the increase in the actually consumed electric power amount in the targeted unit and approximate or other values of those values. This applies throughout the following description.

In the first demand control apparatus described above, for example, in said information table are stored, in association with one another, one or two or more time zones, the operation state of, among the load appliances within said targeted unit, a previously selected load appliance in each time zone, a first reference value, which is the average value of the increase in the actually consumed electric power amount in said targeted unit at that time, and/or a second reference value, which is greater than the first reference value, and, if a combination of a time zone to which the current moment belongs and the operation state of said previously selected load appliance at the current moment exists in said information table, said prediction calculating means calculates said predicted consumed electric power amount based on said first or second reference value corresponding to the combination of that time zone and that operation state.

One of the environmental conditions that make vary the relationship between the operation state of, among the load appliances within the targeted unit, a previously selected load appliance and the actually consumed electric power amount in the targeted unit is considered to be the influence of time zones. For example, in a case where the load appliances include a refrigerator/freezer showcase and a refrigerator unit/condenser that refrigerates it, how foods or other articles are displayed in the refrigerator/freezer showcase and how many people are present in the store or facility in which the refrigerator/freezer showcase and the refrigerator unit/condenser are installed are influenced by time zones. Accordingly, the amount of electric power that is consumed to cool the interior of the refrigerator/freezer showcase of which the temperature has risen because of newly displayed foods, the entry and exit of shoppers, their body temperatures, and other factors is also influenced by time zones.

Out of this consideration, as described above, by taking into consideration time zones and the operation state of the previously selected load appliance in those times zones, and calculating the predicted consumed electric power amount based on the first or second reference value corresponding thereto, it is possible to accurately calculate the predicted consumed electric power amount.

In the first demand control apparatus described above, for example, said prediction calculating means further includes remaining period calculating means for calculating the remaining period from the current moment to said end of the unit period, and said prediction calculating means, if the remaining period is equal to or longer than a predetermined period, calculates said predicted consumed electric power amount based on said first reference value and, if the remaining period is shorter than the predetermined period, calculates said predicted consumed electric power amount based on said second reference value.

As described above, the predicted consumed electric power amount calculated based on the first reference value varies, and this may cause the actually consumed electric power amount to exceed the predicted consumed electric power amount. If demand control is performed based on such a predicted consumed electric power amount, the actually consumed electric power amount in the targeted unit may exceed the actually consumed electric power amount. Even in such a case, if there remains a sufficient period, recovery is possible by properly controlling the load appliance thereafter.

On the other hand, by performing demand control based on the predicted consumed electric power amount calculated based on the second reference value, it is possible to perform demand control with priority given to preventing the actually consumed electric power amount from exceeding a predetermined value.

With the above configuration, if the remaining period is sufficiently long, the predicted consumed electric power amount is calculated based on the first reference value, and, based thereon, demand control is performed with an ample margin to give priority to maintaining the comfort in the store or facility. By contrast, if the remaining period is short, the predicted consumed electric power amount is calculated based on the second reference value, and, based thereon, demand control is performed with priority given to preventing the actually consumed electric power amount from exceeding a predetermined value.

In the first demand control apparatus described above, for example, said previously selected load appliance includes a plurality of refrigerator/freezer showcases, and the operation state of said previously selected load appliance includes, for each refrigerator/freezer showcase, the operation state in which pull-down operation is being performed.

If a plurality of refrigerator/freezer showcases, after defrosting operation, perform pull-down operation simultaneously, the amount of electric power consumed by the refrigerator unit/condenser to which those refrigerator/freezer showcases are connected increases abruptly. This may greatly influence the actually consumed electric power amount of load appliances as a whole.

Out of this consideration, when the previously selected load appliance includes a plurality of refrigerator/freezer showcases, the operation state of the previously selected load appliance includes, for each refrigerator/freezer showcase, a state in which it is performing pull-down operation. Thus, by taking into consideration an abrupt increase in the consumed electric power amount resulting from the pull-down operation of the refrigerator/freezer showcases, it is possible to more accurately calculate the predicted consumed electric power amount.

In the first demand control apparatus described above, for example, said second reference value is the maximum value of the increase in the actually consumed electric power amount in said targeted unit.

In this way, by adopting as the second reference value the maximum value of the increase in the actually consumed electric power amount in the targeted unit, it is possible to reliably make the predicted consumed electric power amount calculated based on the second reference value greater than the actually consumed electric power amount.

To achieve the above object, a second demand control apparatus according to the present invention is configured as follows: a demand control apparatus for controlling a load appliance based on a predicted consumed electric power amount thereof, which is the amount of electric power expected to be consumed by the load appliance until the end of a unit period, is characterized in that said demand control apparatus includes: representative pattern generating means for generating a representative pattern table that describes a representative pattern of the chronological change of the operation state of a load appliance within a unit targeted by demand control; and prediction calculating means for calculating said predicted consumed electric power amount by using the representative pattern table generated by the representative pattern generating means.

By using a table that describes a representative pattern (hereinafter "modeling pattern) of the chronological change of the operation state of the load appliance, it is possible to reduce the variation of the operation state of the load appliance as stored and tabulated. This helps reduce the amount of information in the table, and helps reduce the time and the amount of memory required for retrieval.

Among load appliances, individual differences exist. Moreover, it is highly likely that, even in the same time zone, slight differences exist in the environment in which the load appliances are located between a given day and the day before. Thus, when the operation states of load appliances are stored in a table, the range of the variation of the operation state data is huge.

Therefore, to exclude the influence of variation as mentioned above, for example, the operation state of a load appliance at a given time of day is modeled by analogizing, simplifying, abstracting, formalizing, or otherwise modifying it so that its characteristic features or the like are substantially the same as or approximate to those actually observed. Then, the load appliance is regarded as being in the so modeled state, and, by referring to its information, it is possible, as noted above, to reduce the amount of information in the table and to reduce the time and the amount of memory required for retrieval. As such a model, for example, an operation instruction schedule for the load appliance can be used. This permits easy creation of the operation state data and the like to be referred to.

When the operation states of the load appliances within the targeted unit are used, instead of directly receiving from the load appliances their operation states through communication or the like, it is also possible to refer to the representative pattern table generated as described above in order to acquire the operation states of the load appliances and then predicts the consumed electric power amount. This helps, for example, avoid the overhead associated with communication.

In the second demand control apparatus described above, for example, the demand control apparatus further includes linearly predicted consumed electric power amount calculating means for calculating, through linear prediction, a linearly predicted consumed electric power amount based on the difference between the actual consumed electric power amount acquired immediately previously and the actual consumed electric power amount at the current moment, and the demand control apparatus calculates a corrected predicted consumed electric power amount by using said linearly predicted consumed electric power amount calculated by said linearly predicted consumed electric power amount calculating means and said predicted consumed electric power amount calculated by said prediction calculating means, and controls said load appliance based on the so calculated corrected predicted consumed electric power amount.

In the second demand control apparatus described above, for example, the demand control apparatus calculates the corrected predicted consumed electric power amount by calculating the weighted average of said linearly predicted consumed electric power amount and said predicted consumed electric power amount.

Based on the difference between the actually consumed electric power amount acquired immediately previously and the actually consumed electric power amount at the current moment, through linear prediction, a linearly predicted consumed electric power amount is calculated, and then, by using this linearly predicted consumed electric power amount and the predicted consumed electric power amount calculated by the prediction calculating means, for example by calculating the weighted average of these, a corrected predicted consumed electric power amount is calculated. This helps increase the accuracy with which the consumed electric power amount is predicted.

In the second demand control apparatus described above, for example, the demand control apparatus further includes table generating means for generating an information table relating to a history record of an actually consumed electric power amount, which is the amount of electric power actually consumed in the unit targeted by demand control. Moreover, in said information table are stored, in association with one another, the operation state of, among the load appliances within said targeted unit, a previously selected load appliance, a first reference value, which is the average value of the increase in the actually consumed electric power amount in said targeted unit at that time, and/or a second reference value, which is greater than the first reference value, and said prediction calculating means checks whether or not an operation state identical with the operation state of said previously selected load appliance at the current moment as acquired from said representative pattern table exists in said information table so that, if so, calculates said predicted consumed electric power amount based on said first or second reference value corresponding to that operation state.

In the second demand control apparatus described above, for example, table generating means for generating an information table relating to a history record of an actually consumed electric power amount, which is the amount of electric power actually consumed in a unit targeted by demand control. Moreover, in said information table are stored, in association with one another, one or two or more time zones, the operation state of, among the load appliances within said targeted unit, a previously selected load appliance in each time zone, a first reference value, which is the average value of the increase in the actually consumed electric power amount in said targeted unit at that time, and/or a second reference value, which is greater than the first reference value, and, if a combination of the time zone to which the current moment belongs and the operation state of said previously selected load appliance at the current moment as acquired from said representative pattern table exists in said information table, said prediction calculating means calculates said predicted consumed electric power amount based on said first or second reference value corresponding to the combination of that time zone and that operation state.

In the second demand control apparatus described above, for example, said prediction calculating means further includes remaining period calculating means for calculating the remaining period from the current moment to said end of the unit period, and said prediction calculating means, if the remaining period is equal to or longer than a predetermined period, calculates said predicted consumed electric power amount based on said first reference value and, if the remaining period is shorter than the predetermined period, calculates said predicted consumed electric power amount based on said second reference value.

In the second demand control apparatus described above, for example, said previously selected load appliance includes a plurality of refrigerator/freezer showcases, and the operation state of said previously selected load appliance includes, for each refrigerator/freezer showcase, the operation state in which pull-down operation is being performed.

In the second demand control apparatus described above, for example, said second reference value is the maximum value of the increase in the actually consumed electric power amount in said targeted unit.

To achieve the above object, a first electric power consumption prediction method according to the present invention is configured as follows: an electric power consumption prediction method for calculating and acquiring a predicted consumed electric power amount, which is the amount of electric power predicted to be consumed within an electric-power-monitored unit until an end of a unit period, is characterized in that said method includes a step of calculating said predicted consumed electric power amount by using history information of an actually consumed electric power amount, which is the amount of electric power actually consumed in said electric-power-monitored unit.

Specifically, in the first electric power consumption prediction method described above, for example, as said history information, information relating to a history record of the operation pattern of, among the load appliances within said electric-power-monitored unit, a previously selected load appliance and the actually consumed electric power amount within said electric-power-monitored unit at that time is recorded is kept updated, and, by using that history information, said predicted consumed electric power amount is calculated.

In the first electric power consumption prediction method described above, for example, from said history information, an operation pattern corresponding to the operation pattern of said previously selected load appliance is identified, and, based on said actually consumed electric power amount in the history record thereafter, said predicted consumed electric power amount is calculated.

In the first electric power consumption prediction method described above, for example, said history information is constructed by storing in an information table, in association with one another, the operation state of, among the load appliances within said electric-power-monitored unit, a previously selected load appliance, a first reference value, which is the average value of an increase in an actually consumed electric power amount in said electric-power-monitored unit at that time, and/or a second reference value, which is greater than the first reference value, and whether or not an operation state identical with the operation state of said previously selected load appliance at the current moment exists in said information table is checked so that, if so, said predicted consumed electric power amount is calculated based on said first or second reference value corresponding to that operation state.

Incidentally, the electric-power-monitored unit mentioned above is, in a case where demand control is performed, a unit targeted by demand control. This applies throughout the following description. On the other hand, examples of the first reference value mentioned above include the average value and distribution value of the increase in the actually consumed electric power amount in the electric-power-monitored unit and approximate or other values of those values. This applies throughout the following description.

In the first electric power consumption prediction method described above, for example, said history information is constructed by storing in an information table, in association with one another, one or two or more time zones, the operation state of, among the load appliances within said electric-power-monitored unit, a previously selected load appliance in each time zone, a first reference value, which is the average value of the increase in the actually consumed electric power amount in said electric-power-monitored unit at that time, and/or a second reference value, which is greater than the first reference value, and whether or not a combination of the time zone to which the current moment belongs and the operation state of said previously selected load appliance at the current moment exists in said information table is checked so that, if so, said predicted consumed electric power amount is calculated based on said first or second reference value corresponding to the combination of that time zone and that operation state.

In the first electric power consumption prediction method described above, for example, the remaining period from the current moment to said end of the unit period is calculated so that, if the remaining period is equal to or longer than a predetermined period, said predicted consumed electric power amount is calculated based on said first reference value and, if the remaining period is shorter than the predetermined period, said predicted consumed electric power amount is calculated based on said second reference value.

In the first electric power consumption prediction method described above, for example, said previously selected load appliance includes a plurality of refrigerator/freezer showcases, and the operation state of said previously selected load appliance includes, for each refrigerator/freezer showcase, the operation state in which pull-down operation is being performed.

In the first electric power consumption prediction method described above, for example, said second reference value is the maximum value of the increase in the actually consumed electric power amount in said electric-power-monitored unit.

To achieve the above object, a second electric power consumption prediction method according to the present invention is configured as follows: an electric power consumption prediction method for calculating and acquiring a predicted consumed electric power amount, which is the amount of electric power predicted to be consumed within an electric-power-monitored unit until an end of a unit period, is characterized in that said method includes a step of generating a representative pattern table that describes a representative pattern of the chronological change of the operation state of a load appliance within the electric-power-monitored unit, and calculating said predicted consumed electric power amount by using the representative pattern table.

Specifically, in the second electric power consumption prediction method described above, for example, an information table relating to a history record of an actually consumed electric power amount, which is an amount of electric power actually consumed in the electric-power-monitored unit, is generated, in said information table are stored, in association with one another, the operation state of, among the load appliances within said electric-power-monitored unit, a previously selected load appliance, a first reference value, which is the average value of the increase in the actually consumed electric power amount in said electric-power-monitored unit at that time, and/or a second reference value, which is greater than the first reference value, and whether or not an operation state identical with the operation state of said previously selected load appliance at the current moment as acquired from said representative pattern table exists in said information table is checked so that, if so, said predicted consumed electric power amount is calculated based on said first or second reference value corresponding to that operation state.

In the second electric power consumption prediction method described above, for example, an information table relating to a history record of an actually consumed electric power amount, which is the amount of electric power actually consumed in the electric-power-monitored unit, is generated. Moreover, in said information table are stored, in association with one another, one or two or more time zones, the operation state of, among the load appliances within said electric-power-monitored unit, a previously selected load appliance in each time zone, a first reference value, which is the average value of the increase in the actually consumed electric power amount in said electric-power-monitored unit at that time, and/or a second reference value, which is greater than the first reference value, and whether or not a combination of the time zone to which the current moment belongs and the operation state of said previously selected load appliance at the current moment as acquired from said representative pattern table exists in said information table is checked so that, if so, said predicted consumed electric power amount is calculated based on said first or second reference value corresponding to the combination of that time zone and that operation state.

In the second electric power consumption prediction method described above, for example, through linear prediction, a linearly predicted consumed electric power amount is calculated based on the difference between the actual consumed electric power amount acquired immediately previously and the actual consumed electric power amount at the current moment, then a corrected predicted consumed electric power amount is calculated by using said calculated linearly predicted consumed electric power amount and said calculated predicted consumed electric power amount, or by using a weighted average of said calculated linearly predicted consumed electric power amount and said calculated predicted consumed electric power amount, and the so calculated corrected predicted consumed electric power amount is treated as the predicted consumed electric power amount to be eventually calculated by the electric power consumption prediction method.

In the second electric power consumption prediction method described above, for example, the remaining period from the current moment to said end of the unit period is calculated so that, if the remaining period is equal to or longer than a predetermined period, said predicted consumed electric power amount is calculated based on said first reference value and, if the remaining period is shorter than the predetermined period, said predicted consumed electric power amount is calculated based on said second reference value.

In the second electric power consumption prediction method described above, for example, said previously selected load appliance includes a plurality of refrigerator/freezer showcases, and the operation state of said previously selected load appliance includes, for each refrigerator/freezer showcase, the operation state in which pull-down operation is being performed.

In the second electric power consumption prediction method described above, for example, said second reference value is the maximum value of the increase in the actually consumed electric power amount in said electric-power-monitored unit.

A construction in which the first reference value and the like are used in the second demand control apparatus described above, or a method in which the first reference value and the like are used in the second power consumption prediction method, offers, in addition to the same advantages as does a construction in which the first reference value and the like are used in the first demand control apparatus described above, or a method in which the first reference value and the like are used in the first power consumption prediction method, the advantages offered by the second demand control apparatus, namely reduction of the amount of information in the table, reduction of the time and the amount of memory required for retrieval, avoidance of the overhead associated with communication, etc., and also helps increase the accuracy with which the consumed electric power amount is predicted.

The second reference value mentioned above is not limited to the maximum value of the increase in the actually consumed electric power amount. Instead, it is possible to adopt, as the second reference value, one of various values so long as it is greater than the first reference value. Examples of such values include values obtained by multiplying the first reference value by constant values, the median value and mode value of the first reference value, and the average value of the highest 30% of measured data. The second reference value may be based on the distribution or standard deviation of measured data. In a case where, as the second reference value, a value obtained by multiplying the first reference value by a constant value is adopted, instead of storing the second reference value itself, the constant value may be stored so that the second reference value is calculated whenever necessary. This helps save the amount of memory.

From the viewpoint of simple and reliable risk management, it is preferable to adopt the maximum value as the second reference value.

To achieve the above object, a first program according to the present invention makes a computer perform the functions of the individual means of the first or second demand control apparatus described above.

To achieve the above object, a second program according to the present invention makes a computer execute the first or second electric power consumption prediction method described above.

The significance and benefits of the present invention will become clear through the following description of embodiments thereof.

It should however be understood that the embodiments described below are merely examples of how the present invention can be carried out, and therefore that the meanings of the terms used to refer to the features and components of the present invention are not limited to those in which they are used in the following description.

## BRIEF DESCRIPTION OF THE DRAWINGS

Fig. 1 is a diagram illustrating how a consumed electric power amount is linearly predicted in a first embodiment of the present invention;
Fig. 2 is a diagram showing how a demand control apparatus and load appliances are interconnected in the first embodiment;
Fig. 3 is a diagram showing the functional blocks of the demand control apparatus in the first embodiment;
Fig. 4 is a diagram schematically showing the contents of an information table in the first embodiment;
Fig. 5 is a flow chart illustrating the operation of the demand control apparatus in the first embodiment;
Fig. 6 is a diagram schematically showing the contents of an information table in a second embodiment of the invention;
Fig. 7 is a flow chart illustrating the operation of the demand control apparatus in the second embodiment;
Fig. 8 is a flow chart illustrating the operation of the demand control apparatus in the second embodiment;
Fig. 9 is a flow chart illustrating the operation of the demand control apparatus in the second embodiment;
Fig. 10 is a flow chart illustrating the operation of the demand control apparatus in the second embodiment;
Fig. 11 is a diagram schematically showing an operation state model in a third embodiment of the present invention;
Fig. 12 is a diagram schematically showing a second table in the third embodiment;
Fig. 13 is a flow chart illustrating the operation of the demand control apparatus in the third embodiment;
Fig. 14 is a flow chart illustrating the operation of the demand control apparatus in the third embodiment; and
Fig. 15 is a flow chart illustrating the operation of the demand control apparatus in the third embodiment.

## DETAILED DESCRIPTION OF PREFERRED EMBODIMENTS

### First Embodiment

A first embodiment (Embodiment 1) of the present invention will be described below with reference to the relevant drawings.

As opposed to what has been conventionally practiced, in Embodiment 1, for the purpose of predicting the amount of electric power expected to be consumed by load appliances as a whole within a given time span (for example, a unit period of 30 minutes), an information table is used in which are stored, as a history record, in association with one another, the operation states of main load appliances, the amounts of electric power consumed by load appliances as a whole at that time, the time information of that time, and the like. Main load appliances denote part of all the load appliances connected to a power supply system, and typically include load appliances that consume large amounts of electric power, such as refrigerator/freezer showcases and air conditioners. In the following description, the refrigerator/freezer showcase(s) are referred to simply as the "showcase(s)". If the predicted consumed electric power amount exceeds the amount of electric power available for consumption within the remaining period of the time span, the amount of electric power consumed is reduced by, for example, stopping the outdoor units of some air conditioners or even stopping the operation of all air conditioners. This is because, even if the outdoor units of some air conditioners are stopped, it is possible to maintain sufficient comfort indoors by ventilation operation alone, and because, even if the operation of all air conditioners is stopped, at least for a short period, it is possible to keep the resulting loss of comfort indoors so small that humans do not feel it, minimizing the effect.

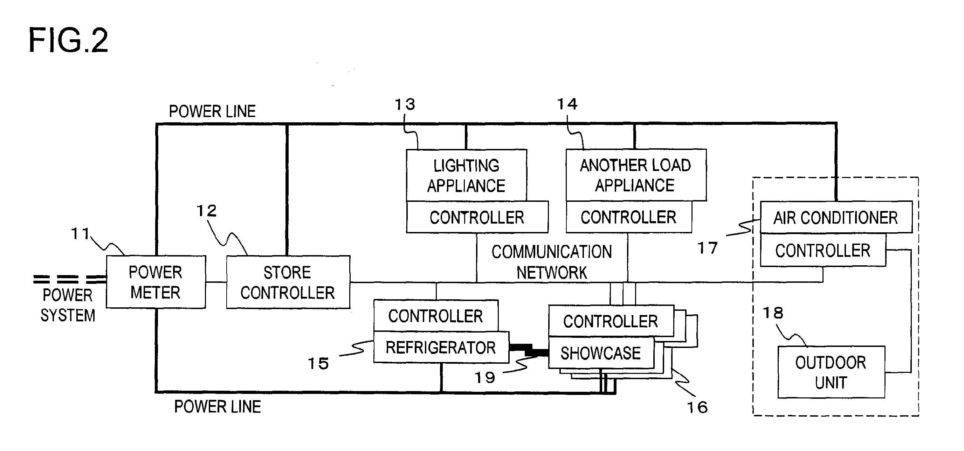

Fig. 2 is a diagram showing how a demand control apparatus and load appliances are interconnected in Embodiment 1.

Shown in Fig. 2 are: a power meter 11 that measures the amount of electric power consumed by all load appliances connected to a power system; a store controller 12 that serves as a demand control apparatus; a lighting appliance 13; a load appliance 14 of any other type; a refrigerator unit/condenser 15 that refrigerates showcases; one or more showcases 16; an air conditioner 17; an outdoor unit 18 of the air conditioner 17; and a refrigerant pipe 19. The blocks identified by numerals 13 to 18 are all load appliances targeted by the demand control performed by the store controller 12. In the following description, the refrigerator unit/condenser 15 is referred to simply as the "refrigerator 15".

In Fig. 2, the blocks identified by numerals 11 to 18, along with a power line and a communication network, constitute a power control system, and the store controller 12 performs demand control. This power control system corresponds to what is referred to as the "targeted unit" or "electric-power-monitored unit" in the appended claims. Instead, the load appliances 13 to 18 (the whole or a part thereof) may be interpreted as the "targeted unit" or "electric-power-monitored unit".

As shown in Fig. 2, each load appliance is connected to a load-appliance-side controller that is connected via the communication network to the store controller 12. These controllers make settings on and perform control of the appliance to which they are connected. These settings and control are made and performed according to instructions from the store controller 12, and can also be made and performed manually on the appliances themselves. The controllers also gather the operation states of the appliances connected thereto, and the store controller 12 reads their data whenever necessary. In addition, with predetermined timing, the store controller 12 reads from the power meter the electric power amount at given moments. Incidentally, the store controller 12 can be connected to the Internet so that the administrator can, by remote control, make settings on, control, monitor, make measurements on, and otherwise manage the store controller and appliances.

Incidentally, the one refrigerator 15 and the one or more showcases 16 are connected together into a single group through refrigerating system connection. Although only one such group is shown in Fig. 2, there may exist a plurality of them, and in fact, in Embodiment 1, there exist a plurality of them. Likewise, although only one pair of an air conditioner 17 and an outdoor unit 18 is shown in Fig. 2, in reality, there exist a plurality of pairs of them.

The refrigerating system connection denotes the fact that the one refrigerator 15 and the one or more showcases 16 are connected together by a common refrigerant pipe 19. Each showcase is fitted with a solenoid valve so that the amount of refrigerant flowing therethrough can be controlled through the adjustment of the degree of opening therethrough. This permits the intake of the refrigerant, and hence the degree of cooling, to be adjusted through control on the showcase.

The refrigerator 15 is used to perform cooling operation in the showcases 16, and thus operates in coordination with the cooling operation in the showcases 16, but is not turned on or off under the direct control of the showcases 16. When the solenoid valves of all the showcases are closed, the refrigerator 15 is turned off. That is, when all the showcases 16 close their solenoid valves, the refrigerator 15 stops operating, and therefore, as long as any one of the showcases 16 is operating, the refrigerator 15 keeps operating.

Incidentally, the showcases 16 perform defrosting operation between different sessions of cooling operation. It is known that cooling performance is degraded by frost that grows on the refrigerating tube (heat exchanger, evaporator) laid around the showcases. The frost thus needs to be removed, and this is achieved by defrosting operation. To perform defrosting operation, the showcases 16 close their solenoid valves, and turn on defrosting heaters. After defrosting operation has been performed for a prescribed period considered long enough to remove frost, the defrosting heaters are turned off, and the solenoid valves are opened to perform quick cooling, thereby restarting cooling operation.

The quick cooling here is one of the factors that produce peaks in the amount of electric power consumed. For each showcase, when to perform defrosting operation is previously scheduled. The defrosting operation is performed approximately in the same time zone every day. The above scheduling is so made that the periods in which defrosting operation is performed for the individual showcases are so distributed that the peaks in the amount of electric power they consume do not overlap. The scheduling is made on the store controller 12 or on the controllers of the showcases 16.

The behavior of the individual showcases 16 differ due to differences in their characteristics, the environment around them, and the articles they cool. Thus, in a case where a large number of showcases 16 are used simultaneously, it is extremely difficult to grasp the characteristic of the overall electric consumption. That is, to predict the amounts of electric power consumed by a plurality of showcases 16 with high accuracy through theoretical calculations, it is necessary to take into consideration various factors such as individual differences as mentioned above, and this requires extremely complicated calculations. The various factors include the influence of air conditioning; that is, air conditioning has not a small influence on the cooling of articles in the showcases, and this cannot be coped with by simple calculations.

For this reason, in Embodiment 1, electric power consumption is predicted not by the use of theoretically calculated values but by the use of an information table that stores dynamic history records of the operation states of main load appliances that consume large amounts of electric power, for example showcases and air conditioners. This eliminates the need for theoretical calculations, and makes it possible to make predictions to suit given specific situations.

Now, a description will be given of how the store controller 12 predicts the consumed electric power amount and controls the load appliances in Embodiment 1.

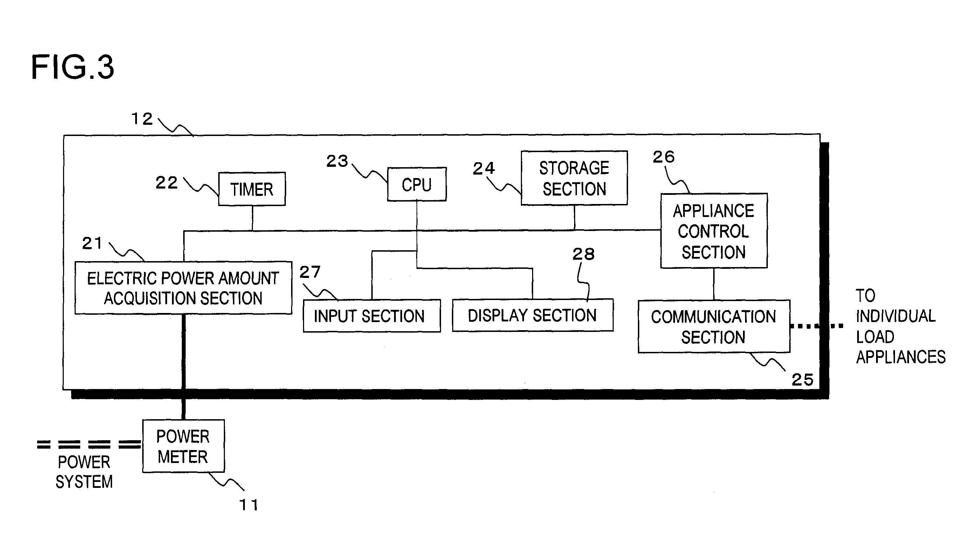

Fig. 3 is a diagram showing the functional blocks of the store controller 12. Shown in Fig. 3 are as follows: an electric power amount acquisition section 21 that acquires electric power amount data from the power meter 11; a timer 22 that serves as a clock and otherwise manages time; a CPU (central processing unit) 23 that controls the different parts of the store controller 12, performs necessary processing, and otherwise operates; a storage section 24 that is a memory or other storage device; a communication section 25 that communicates with the controllers of the load appliances; an appliance control section 26 that, via the communication section 25, controls the load appliances, gathers data, and otherwise operates; an input section 27 via which settings and the like are made on the store controller 12; and a display section 28, such as a liquid crystal display screen, that is used when settings and the like are made on the store controller 12.

To make a prediction, the store controller 12 operates as follows.

To calculate the amount of currently available electric power, the store controller 12 acquires electric power amount data from the power meter 11 via the electric power amount acquisition section 21. It then calculates, based on this value and the contracted electric power amount, the amount of currently available electric power.

Subsequently, the store controller 12 predicts the amount of electric power expected to be consumed from now. To this end, it communicates, via the appliance control section 26 and the communication section 25, with the controllers of the individual load appliances to obtain the current settings and operation states of the appliances. The settings on the appliances have been made from the store controller 12, but may have been made manually directly on the appliances themselves. Thus, by obtaining the operation states, the latest settings are grasped.

On the basis of the current settings and operation states of the appliances thus obtained, the appliance control section 26 searches the history records (which will be described later) contained in the information table stored in the storage section 24 for an agreeing portion to identify an agreeing position (hereinafter referred to as a "history position"). If a plurality of history positions are identified, among those history positions, the one at the moment closest to the current moment is selected as the history position to be identified. On the other hand, if no history position corresponding to the current operation states of the load appliances exists in the information table, the searching operation is ended.

For the calculation of the predicted value of the consumed electric power amount, an actually consumed electric power amount stored in the information table is used. Specifically, based on an actually consumed electric power amount acquired in the future direction following the identified history position within the information table, the predicted consumed electric power amount is calculated. If no history position corresponding to the operation state of the load appliances at the current moment exists in the information table, this indicates that no actually consumed electric power amount that is usable exists in the information table. In this case, through linear prediction based on the difference between the accumulated actually consumed electric power amount acquired immediately previously and the accumulated actually consumed electric power amount at the current moment, the predicted consumed electric power amount is calculated. This method is the same as the conventional one described earlier with reference to Fig. 1. By the method described above, mainly the CPU 23 calculates the predicted value of the consumed electric power amount.

Lastly, based on the predicted value of the consumed electric power amount, the store controller 12 checks whether or not the used electric power amount exceeds the contracted electric power amount, and, if the predicted consumed electric power amount exceeds the amount of electric power available for consumption within the remaining period of the time span, reduces the amount of electric power expected to be consumed thereafter by restricting the operation of particular appliances. Specifically, via the communication section 25, the appliance control section 26, for example, stops the operation of the outdoor units of some air conditioners that are considered to have little influence on other appliances or stops the operation of all air conditioners, and thereby reduces the amount of electric power consumed. If, even then, it is found that a desired reduction in the consumed electric power amount cannot be achieved, the store controller 12 sounds a buzzer or otherwise makes a human aware that no reduction in the consumed electric power amount is possible, and leaves him to decide what control to perform thereafter. That is, it leaves the human to make decisions and judgments to manually restrict the operation of the appliances in order to reduce the consumed electric power amount.

Next, the information table mentioned above will be described.

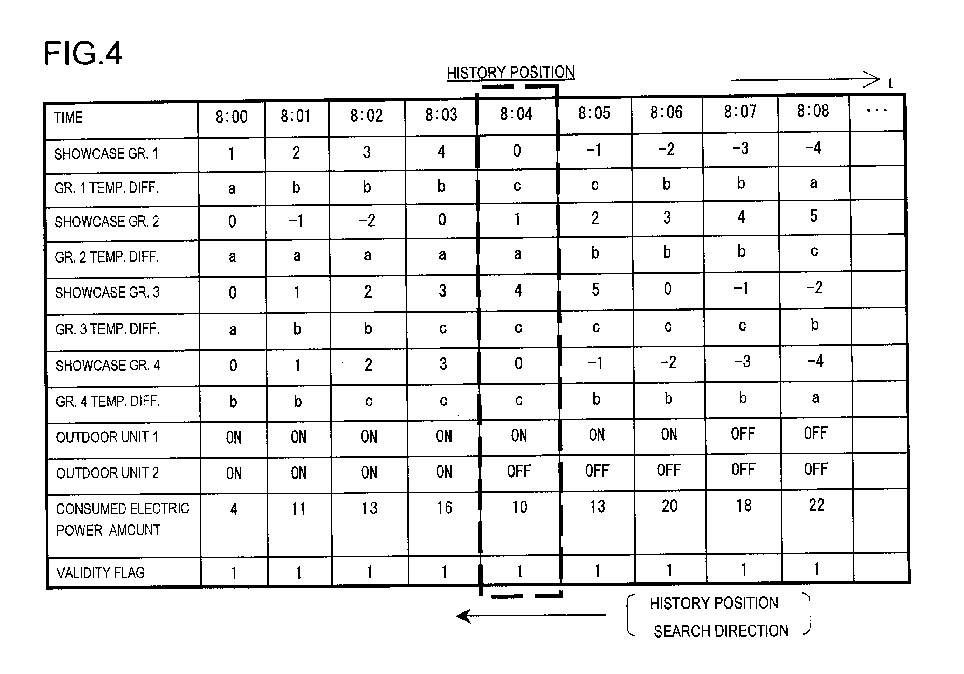

In the information table, there are stored, as a history record, in association with one another, the operation states of main load appliances, the consumed electric power amounts of load appliances as a whole at that time, and the time information and the like of that time. Here, main load appliances denote load appliances that consume large amounts of electric power, for example, showcases and air conditioners. Fig. 4 is a diagram schematically showing the information table in Embodiment 1.

In Fig. 4, the leftmost column shows the items stored in the information table. The column immediately to the right shows the contents of those items as stored first, consisting of operation states of the load appliances, electric power amounts, etc. In Embodiment 1, every one minute, a history record is added to the right of the table. When a history position is identified as described previously, a search is performed in the direction of the temporal axis. Thus, a history position represents the position of a column located at a particular moment. The information table contains, for example, 10 days worth of history records.

The top row shows the time of day (moment) as counted in the store controller 12, and is obtained from the timer 22.

The second row from top shows the operation state of group 1 of showcases. Here, a group denotes, among a large number of showcases provided, a family thereof of which the operation is set and controlled synchronously. Thus, quite naturally, within one group, the operation state is synchronous. That is, what is referred to as a family here differs from the previously mentioned group of one refrigerator 15 and a plurality of showcases 16 that are connected together through refrigerating system connection. Incidentally, of the values representing operation states in the table, zero indicates a switch from one kind of operation to another, specifically from defrosting operation to cooling operation or from cooling operation to a defrosting operation, and a positive value indicates the lapse of time after the start of defrosting operation. A negative value indicates the lapse of time after the start of cooling operation.

The next row shows, for one representative showcase in group 1 of showcases, the interior temperature deviation thereof, that is, the level determined based on the "interior temperature" subtracted from the "set temperature" (the difference between the set temperature and the interior temperature). The one representative showcase may be selected in any manner. Moreover, the above-mentioned level is determined in such a way as to be "a" if the absolute value of the "interior temperature" subtracted from the "set temperature" is within a given range from zero, "b" if it exceeds this range but lies within the next range, "c" if it exceeds this range but lies within the next range, and so forth. For example, it is defined as "a" if the above-mentioned absolute value is 0 or more but 1 or less, "b" if it exceeds 1 but 2 or less, "c" if it exceeds 2 but 3 or less, and "d" if it exceeds 3.

The fourth to ninth rows from top relate to groups 2 to 4 of showcases, and the contents shown here are similar to those relating to group 1 of showcases.

The tenth and eleventh rows from top relate to the outdoor units of air conditioners 1 and 2, and show whether or not the outdoor units are operating, that is, whether or not the compressors are operating. In Embodiment 1, history records are stored in relation to two air conditioners. Incidentally, the contents of the history records may contain, in addition to whether the outdoor units are turned on or off, the operation states of the air conditioners, specifically whether they are operating with high, medium, or low strength.

The next row shows the overall actually consumed electric power amount at that moment. In Embodiment 1, the difference from the actually consumed electric power amount acquired one minute earlier is stored. Instead, the actually consumed electric power amount at that moment may itself be stored.

The bottom row of the information table shows the validity flag that indicates whether or not the actually consumed electric power amount is a value that can later be used as a history record. A "1" in the information table signifies "valid (usable)", and a "0" signifies "invalid (unusable)".

The necessity for information that indicates whether or not a consumed electric power amount (actually consumed electric power amount) is a valid value arises from, for example, the following reason. Suppose that a sales demonstration is performed in a given time zone on a particular day. This unusually increases the amount of electric power consumed. This, however, is an exceptional case different from the everyday sequential operation, and therefore, if that value is later used as learned data, it is unlikely that a prediction is made with high accuracy. That is, the predicted value is highly likely to contain a large error.

Let the consumed electric power amount acquired from the power meter 11 at a given moment be W, and let the average value and the standard deviation of the actually consumed electric power amounts stored in the information table for the past 10 days relative to that given moment be M and $\sigma$. Then, if the consumed electric power amount W falls within the range given by the inequality "M - $3\sigma \leq W \leq M + 3\sigma$", the consumed electric power amount W is judged to be valid and, if not, it is judged to be invalid. This range is one established around the average value of samples that exhibit a normal distribution so that the range includes 99% of the samples. If an electric power amount is not a valid value, it does not need to be stored in the information table. In Embodiment 1, however, all data are stored in the information table in chronological order.

It should be understood that the values specifically shown for the various items in the information table shown in Fig. 4 are all given for the purpose of explanation, and therefore should not be taken as representing actual operation.

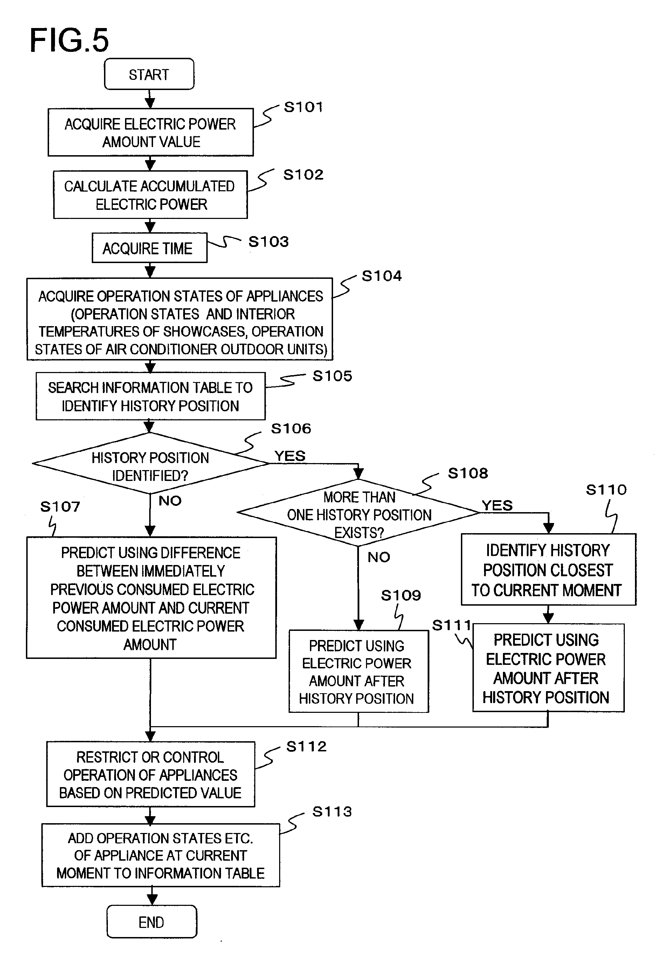

Lastly, with reference to Fig. 5, the operation of the store controller 12 will be described with reference to a flow chart. During this operation, every time a predetermined period (for example, one minute) elapses, the consumed electric power amount is predicted, then the sum of this predicted value and the consumed electric power amount at that moment is compared with the contracted electric power amount, and then the load appliances are controlled according to the result of the comparison and the information table is updated.

In step S101, the electric power amount acquisition section 21 acquires from the power meter 11 the electric power amount at the current moment, and calculates the difference thereof from the electric power amount acquired one minute earlier.

In step S102, the difference of the electric power amount acquired in step S101 is added to the accumulated consumed electric power amount acquired one minute earlier to calculate the "accumulated consumed electric power amount from the start of the set time span (30 minutes)" as observed at the current moment. Incidentally, the accumulated consumed electric power amount is reset to zero, that is, its initial value, every time 30 minutes, that is, the set time span (unit period), elapses.

In step S103, information relating to time is obtained from the timer 22 to acquire the time of the current moment.

In step S104, the operation states of the individual appliances, such as the operation state (defrosting operation / cooling operation) and the interior temperature of the showcases and the operation state of the outdoor unit of the air conditioner, at the current moment are acquired via the communication section 25.

In step S105, based on the operation states of the appliances at the current moment as acquired in step S104, with reference to the information table stored in storage section 24, a search is performed to check whether or not a corresponding history position exists and to identify such a history position. That is, it is checked whether the operation states of the appliances at the current moment as acquired in step S104 agree with any of the past operation states of the appliances as identified by the information stored in the information table (the information on the second to eleventh rows in Fig. 4). If there are any past operation states of the appliances that agree, the position where they are stored in the information table is identified as a history position. Here, for the purpose of identifying the history position, the above-mentioned validity flag is referred to.

In step S106, whether or not a history position has been identified is checked. Specifically, if, in step S105, a corresponding history position was identified in the information table, the operation flow then proceeds to step S108, and, if not, it then proceeds to step S107.

In step S107, since no history position has been identified in the information table, that is, no value that agrees with the situation exists in the history records, the amount of electric power expected to be consumed from the current moment to the end of the set time span is predicted through linear prediction based on the differential electric power amount between the immediately previous accumulated electric power amount and the current accumulated electric power amount. This method is the same as the conventional prediction method described earlier with reference to Fig. 1.

In step S108, whether or not, when a history position was searched for, there existed a plurality of corresponding positions is checked. If a plurality of corresponding positions existed, the operation flow proceeds to step S 110, and, if only one corresponding position existed, the operation flow proceeds to step S109.

In step S109, by the use of an actually consumed electric power amount stored in the information table, the amount of electric power expected to be consumed from the current moment to the end of the set time span is predicted. Specifically, a predicted value is calculated by adding together all the values of the electric power amounts for the time period from the current moment until the end of the set time span after the history position identified in the information table.

For example, suppose: "the set time span is 30 minutes, the start time of the set time span is exactly 2:00 on January 10, and the current moment is 2:10 on January 10". Moreover, suppose that the identified history position is 8: 04 on January 9, and that the consumed electric power amount from 8:04 on January 9 until 8:24 on January 9 as calculated from the values stored in the information table is Wa. Then, the amount of electric power expected to be consumed from the current moment until the end of the set time span is predicted to be Wa.

In step S 110, since a plurality of corresponding positions exist as candidate history positions, the history position closest to the current moment among those for the past ten days irrespective of their dates is selected and identified. If there exist a plurality of history positions at the same moment close to the current moment, the history position of the current day or of a day close thereto is selected and identified.

In step S111, as in step S109, by the use of an actually consumed electric power amount stored in the information table, the amount of electric power expected to be consumed from the current moment to the end of the set time span is predicted. Specifically, a predicted value is calculated by adding together all the values of the electric power amounts for the time period from the current moment until the end of the set time span after the history position identified in the information table.

In step S 112, to which the operation flow proceeds after a prediction is made in step S107, S109, or S111, the sum of the "accumulated electric power amount calculated in step S102" and the "predicted value of the amount of electric power expected to be consumed from the current moment until the end of the set time span as calculated in steps S107, S109, or S111" is compared with the contracted electric power amount. If the sum is found to exceed the contracted electric power amount, the operation of the appliances is restricted and controlled. Specifically, in Embodiment 1, operation restriction is performed as by stopping the outdoor units of an appropriate number of air conditioners, with priority taken into consideration. Or, alternatively, control is so performed as to stop the whole operation, that is, the operation of both the indoor and outdoor units, of some air conditioners, or even stop all air conditioners.

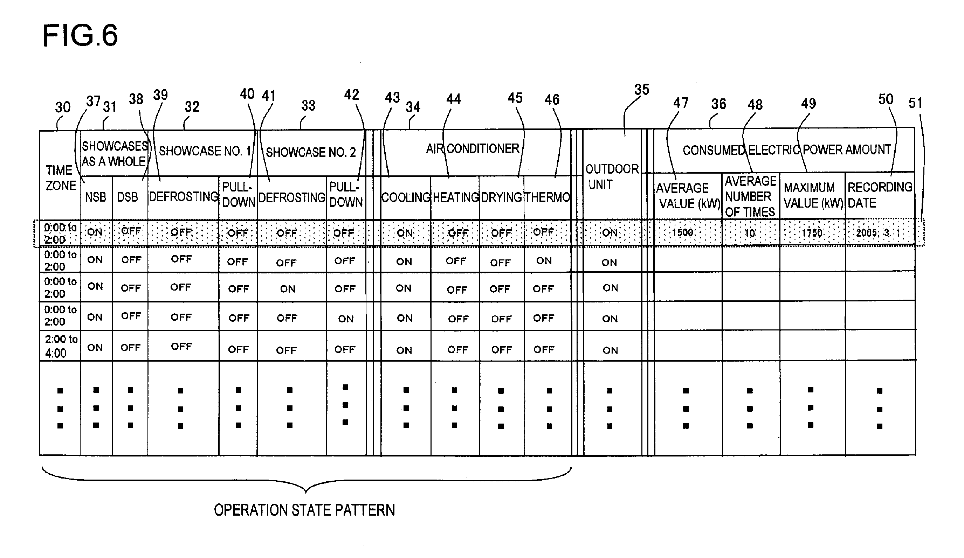

Subsequent to step S 112, in step S113, the operation states of the appliances at the current moment are, along with time information, the difference from the electric power amount acquired in step S101, and other data, are added, as a history record, to the information table. Specifically, judgments are made on the duration of defrosting/ cooling in the showcases and on the interior temperature deviation, and the judgment results are added to the information table. Moreover, the difference of the electric power amount corresponding to row 12 of Fig. 6 is added to the information table. Here, the above-mentioned validity flag is also stored in the information table (for example, the validity flag is set based on the difference of the electric power amount).

As described previously, the operation states of the load appliances as acquired from their respective controllers via the appliance control section 26 and the communication section 25 may differ from the operation states set by the store controller 12. Such difference arises from the settings being manually changed directly on the load appliances. A case in which such difference is present is considered to be an exceptional case different from the everyday sequential operation. Thus, if the value of a history record obtained when such difference is present is used later, it is unlikely that a prediction is made with high accuracy, and using that value is rather highly likely to produce a large error in the predicted value. For this reason, as an indication of this, a discrimination bit may together be stored in the information table. In that case, when a history position is identified in step S105, a search is performed with not only the previously-mentioned validity flag but also the discrimination bit taken into consideration.

**Second Embodiment**

A second embodiment (Embodiment 2) of the present invention will be described below with reference to the relevant drawings.

How a demand control apparatus and load appliances are interconnected in Embodiment 2 is basically the same as how they are interconnected in Embodiment 1, that is, as shown in Fig. 2. Accordingly, no explanation will be repeated of such features of the interconnection among the demand control apparatus and the load appliances and of the operation of the load appliances in Embodiment 2 as are common to Embodiments 1 and 2.

In the demand control apparatus of Embodiment 2, every prediction period (for example, every 30 seconds), the store controller 12 predicts the amount of electric power expected to be consumed by the load appliances as a whole within a time span (a predetermined time span, for example 30 minutes) set for demand control. To predict the consumed electric power amount, the store controller 12 uses an information table in which are stored, in association with one another: the operation states of main load appliances in the past; the average value of the increases in the consumed electric power amount of the load appliance as a whole as observed from one prediction period to the next at that time (hereinafter referred to as the "average increase in consumed electric power amount), or the maximum value of the increases in the consumed electric power amount of the load appliance as a whole as observed from one prediction period to the next at that time (hereinafter referred to as the "maximum increase in consumed electric power amount); and the time information of that time. The store controller 12, if the period remaining until the end of set time span is long, predicts the consumed electric power amount of the load appliances as a whole based on the average increase in consumed electric power amount, and, if the period remaining until the end of set time span is short, predicts the consumed electric power amount of the load appliances as a whole based on the maximum increase in consumed electric power amount. Main load appliances denote those that consume large amounts of electric power, such as showcases and air conditioners or the outdoor units thereof.

When the store is closed, the showcases 16 shown in Fig. 2 have their interior illumination turned off, and have covers put on them to keep the interior cool. This alleviates the heat load of the showcases 16. Moreover, the target interior set temperatures of the showcases 16 are also changed. This operation state of the showcases 16 in which they are when the store is closed is called NSB (night set-back).

Even when the store is open, for the purpose of energy saving, the showcases 16 often have the brightness of their interior illumination lowered and their internal set temperatures raised. This operation state of the showcases 16 in which they are when the store is open is called DSB (demand set-back).

When the operation state of the showcases 16 is NSB or DSB, the showcases 16 consume comparatively small amounts of electric power.

Whether the operation state of the showcases 16 is NSB or DSB has not a small influence on the prediction of the consumed electric power amount of the load appliances as a whole. Accordingly, in Embodiment 2, to accurately predict the consumed electric power amount of the load appliances as s whole, whether the operation state of the showcases 16 is NSB or DSB is taken into consideration.

The controllers of the showcases 16 check whether the showcases 16 are in NSB or DSB, and inform the store controller 12 of the check results.

Incidentally, in a case where a plurality of showcases 16 are provided, the timing with which those showcases 16 are brought into NSB and DSB is so scheduled that state changes take place approximately simultaneously for all the showcases 16. Instead, the scheduling may be done individually for the showcases 16.

After the showcases 16 perform defrosting operation, they perform quick cooling until their interior temperatures, which have been high as a result of heating, fall down to a predetermined set value.

This quick cooling that the showcases 16 perform after defrosting operation is called pull-down operation. In a case where a plurality of showcases 16 are provided, if most of the showcases 16 simultaneously start to perform pull-down operation, the amount of electric power consumed by the refrigerator 15, which cools all the showcases 16, increases sharply and greatly.

Whether the operation state of the showcases 16 is pull-down operation or not has not a small influence on the prediction of the consumed electric power amount of the load appliances as a whole. Accordingly, in Embodiment 2, to accurately predict the consumed electric power amount of the load appliances as s whole, as one operation state of the showcases 16, pull-down operation is taken into consideration.

The lapse of time after each showcase 16 starts defrosting operation until it switches to pull-down operation varies depending on the operation conditions of the individual showcases 16, and thus cannot be grasped previously. The controllers of the showcases 16 monitor the operation pattern of the showcases 16 to check whether they are performing pull-down operation, and inform the store controller 12 of the check results.

The operation states of the air conditioner 17 include, in addition to three operation states, namely heating, cooling, and drying, a fourth operation state (hereinafter referred to as "thermo") into which it enters after the temperature inside the store has reached the target temperature. The controller of the air conditioner 17 checks which of the above four operation states the air conditioner 17 is currently in, and notifies the store controller 12 of the check result.

Moreover, the controller of the air conditioner 17 also checks whether the outdoor unit 18 is on or off, and notifies the store controller 12 of the check result.

Here, the outdoor unit 18 is said to be off when the air conditioner 17 is completely stopped. Thus, unless the air conditioner 17 is completely stopped, the outdoor unit 18 is judged to be on.

Although, in Fig. 2, only one air conditioner 17 is connected to the outdoor unit 18, a plurality of air conditioners may be connected thereto.

Fig. 6 is a diagram schematically showing the information table in Embodiment 2.

In Embodiment 2, the information table is constructed every prediction period (for example, 30 seconds) by the store controller 12.

The information table contains: a "time zone" column 30 in which are stored time zones divided in units of a predetermined length of time; a "showcases as a whole" column 31, a "showcase No. 1" column 32, and a "showcase No. 2" column 33 in which are stored the operation states of the showcases 16; an "air conditioner" column 34 in which is stored the operation state of the air conditioner 17; an "outdoor unit" column 35 in which is stored the operation state of the outdoor unit 18; and a "consumed electric power amount" column 36 in which is stored information relating to the consumed electric power amount of the load appliances as a whole.

In the "time zone" column 30, there are stored times zones defined by dividing 24 hours in units of a predetermined length of time. For example, in the information table shown in Fig. 6 are stored time zones "0:00 to 2:00", "2:00 to 4:00", ... defined by dividing 24 hours in units of two hours.

The "showcases as a whole" column 31 consists of an "NSB" column 37 and a "DSB" column 38. In the "NSB" and "DSB" columns 37 and 38, there is stored discrimination information for identifying whether the showcases 16 as a whole (that is, all the showcases 16) are in NSB, in DSB, or in neither NSB nor DSB. If the showcases 16 as a whole are in NSB, "ON" is stored in the "NSB" column 37, and "OFF" is stored in the "DSB" column 38.

Embodiment 2 assumes that the showcases 16 include a plurality of showcases, and the timing with which the switching between NSB and DSB is performed is so scheduled that state changes take place simultaneously for all the showcases 16.

Incidentally, in a case where the timing with which the switching between NSB and DSB is performed is so scheduled that state changes take place at different times for different showcases, the "NSB" and "DSB" columns are provided for each showcase.

In the "showcase No. 1" column 32 and the "showcase No. 2" column 33, there are stored, in a case where, for example, two showcases, namely showcase No. 1 (unillustrated) and showcase No. 2 (unillustrated) are provided, the operation states of the showcases Nos. 1 and 2, respectively.

Specifically, the "showcase No. 1" column 32 consists of a "defrosting" column 39 and a "pull-down" column 40 in which is stored discrimination information for identifying whether the operation state of the showcase No. 1 is a defrosting state (the state in which it is performing defrosting operation) or a pull-down state (the state in which it is performing pull-down operation), respectively.

When the operation state of the showcase No. 1 is defrosting operation, "ON" is stored in the "defrosting" column 39 , and "OFF" is stored in the "pull-down" column 40.

When the operation state of the showcase No. 1 is pull-down operation, "OFF" is stored in the "defrosting" column 39 , and "ON" is stored in the "pull-down" column 40.

When the operation state of the showcase No. 1 is ordinary cooling operation, "OFF" is stored in the "defrosting" column 39 , and "OFF" is stored also in the "pull-down" column 40.

The "showcase No. 2" column 33 consists of a "defrosting" column 41 and a "pull-down" column 42, and "ON" and "OFF" are stored according to rules similar to those according to which they are stored in the "defrosting" column 39 and the "pull-down" column 40 of the "showcase No.1" column 32.

The "air conditioner" column 34 consists of a "cooling" column 43, a "heating" column 44, a "drying" column 45, and a "thermo" column 46 in which are stored discrimination information for identifying which of the following operation states the air conditioner 17 is currently in: cooling, heating, drying, and thermo.

If the air conditioner 17 is in one of the above four operation states, "ON" is stored in the corresponding column, and "OFF" is stored on the other columns. Incidentally, if the air conditioner 17 is not operating, "OFF" is stored in all the columns constituting the "air conditioner" column 34.

In the "outdoor unit" column 35, there is stored discrimination information for identifying whether or not the outdoor unit 18 has been stopped. If the outdoor unit 18 is stopped, "OFF" is stored in the "outdoor unit" column 35, and, if it is not stopped, "ON" is stored there.

The "consumed electric power amount" column 36 consists of: an "average value" column 47 in which is stored the average increase in consumed electric power amount with respect to the load appliances as a whole; an "average number of times" column 48 in which is stored the number of times that the average increase in consumed electric power amount was calculated; a "maximum value" column 49 in which is stored the maximum increase in consumed electric power amount with respect to the load appliances as a whole; and a "recoding date" column 50 in which are stored the date, time, and the like at which the maximum increase in consumed electric power amount was recorded.

In the information table shown in Fig. 6, for example, the row indicated by numeral 51 shows that the main load appliances are operating in the following operation state pattern (hereinafter, this operation state pattern will be referred to as "operation state pattern A"):

"Time zone" column 30 = "0:00 to 2:00"
"NSB" column 37 of "showcases as a whole" column 31 = "ON"
"DSB" columns 38 of "showcases as a whole" column 31 = "OFF"
"Defrosting" column 39 of "showcase No. 1" column 32 = "OFF"
"Pull-down" column 40 of "showcase No. 1" column 32 = "OFF"
"Defrosting" column 41 of "showcase No. 2" column 33 = "OFF"
"Pull-down" column 42 of "showcase No. 2" column 33 = "OFF"
"Cooling" column 43 of "air conditioner" column 34 = "ON"
"Heating" column 44 of "air conditioner" column 34 = "OFF"
"Drying" column 45 of "air conditioner" column 34 = "OFF"
"Thermo" column 46 of "air conditioner" column 34 = "OFF"
"Outdoor unit" column 35 = "ON"

What is meant by "0:00 to 2:00" in the "time zone" column 30 in operation state pattern A is that operation state pattern A represents the operation states actually assumed by the load appliances in the time zone from 0:00 to 2:00.

The row indicated by numeral 51 further shows:

"Average value" column 47 of "consumed electric power amount" column 36 = 1 500 kW

"Average number of times" column 48 of "consumed electric power amount" column 36 = 10 times

"Maximum value" column 49 of "consumed electric power amount" column 36 = 1 750 kW

"Recoding date" column 50 of "consumed electric power amount" column 36 = 1 March, 2005.

These data show that the main load appliances have operated in the same operation state pattern as operation state pattern A described above ten times in the past (the "average number of times" column 48 of the "consumed electric power amount" column 36 = 10 times), the average and maximum increases in consumed electric power amount on those ten occasions were 1 500 kW (the "average value" column 47 of the "consumed electric power amount" column 36 = 1 500 kW) and 1 750 kW (the "maximum value" column 49 of "consumed electric power amount" column 36 = 1 750 kW), respectively, and the date on which this maximum increase in consumed electric power amount was recorded was 1 March, 2005 (the "recoding date" column 50 of the "consumed electric power amount" column 36 = 1 March, 2005).

As will be described later, in Embodiment 2, an upper limit value is set for the value stored in the "average number of times" column 48 of the "consumed electric power amount" column 36, and the upper limit value is 100.

In the demand control apparatus of Embodiment 2, the store controller 12, by learning the operation states of main load appliances, constructs information table, and, based on this information table, predicts the amount of electric power expected to be consumed by the load appliances as a whole.

First, how the store controller 12 constructs the information table will be described.

With predetermined timing, the store controller 12 acquires discrimination information indicating the operation states of the showcases Nos. 1 and 2 constituting the showcases 16 from their respective controllers, acquires discrimination information indicating the operation state of the air conditioner 17 from its controller, and acquires discrimination information indicating the operation state of the outdoor unit 18. The store controller 12 also acquires, with the same timing as the above predetermined timing, the consumed electric power amount of the load appliances as a whole from the power meter 11. The above predetermined timing is synchronous with the prediction period, and, in Embodiment 2, recurs every 30 seconds.

The power meter 11 adds up the amounts of electric power consumed by the individual load appliances every time span set for demand control. In Embodiment 2, the time span set for demand control is 30 minutes, and the power meter 11 starts adding up the consumed electric power amounts for a new 30 minutes' time span at minute 0 of this period. The timing of minute 0 here needs to be synchronous with the timer of the power meter that the electric power supplier uses to calculate the charge for electric power. In Embodiment 2, it is assumed that the adjustment needed for that purpose has previously been done.

The store controller 12 searches the information table to check whether or not there exists therein an operation state pattern the same as that of the main load appliances as represented by the acquired discrimination information indicating the operation states of the showcases Nos. 1 and 2, the air conditioner 17, and the outdoor unit 18 (corresponding to the columns 37 to 46) and the time zone to which the moment at which that discrimination information was acquired belongs (corresponding to the "time zone" column 30). As a result of the search, if such an operation state pattern exists in the information table, the "average value" column 47, the "average number of times" column 48, the "maximum value" column 49, and the "recoding date" column 50 corresponding to the operation state pattern are updated according to the consumed electric power amount acquired from the power meter 11.

Here, for the sake of convenience, operation state pattern A described above is considered, and the operation performed to update the value stored in the "consumed electric power amount" column 36 corresponding to operation state pattern A will be described. If an operation state pattern the same as operation state pattern A exists in the information table, the store controller 12 calculates the average increase in consumed electric power amount through averaging based on formula (1) below, and stores the thus calculated value in the "average value" column 47 corresponding to operation state pattern A.

$$\text{"Average increase in consumed electric power amount"}$$

$$= (\text{"average increase in consumed electric power amount as recorded in the past"}$$

$$\times \text{"number of times of recording"} + \text{"increase"})$$

$$/ (\text{"number of times of recording"} + 1) \tag{1}$$

Here, the "average increase in consumed electric power amount as recorded in the past" is the average increase in consumed electric power amount previously stored in the "average value" column 47, the "number of times of recording" is the number of times that the average increase in consumed electric power amount was calculated, and the "increase" is the difference of the consumed electric power amount of the load appliances as a whole as obtained from the power meter 11 this time from the consumed electric power amount of the load appliances as a whole as obtained from the power meter 11 last time (that is, 30 seconds before).

When the number of times of recording reaches 100, the store controller 12, assuming that it has leaned the operation states of the main load appliances, uses the results of learning for the prediction of the consumed electric power amount of the load appliances as a whole.

Moreover, the store controller 12 stores, in its internal storage device (unillustrated), the number of times of recording in formula (1), and stores that number of times of recoding in the "average number of times" column 48 corresponding to operation state pattern A in the information table. When the number of times of recording has reached 100, however, the updating of the "average number of times" column 48 is stopped.

The average increase in consumed electric power amount corresponding to the row indicated by numeral 51 in Fig. 6, namely 1 500 kW, signifies that, when the load appliances operated in the operation states represented by operation state pattern A described above, the average of the amounts of electric power consumed by all the load appliances in 30 seconds was 1 500 kW.

For example, consider a case where the "average increase in consumed electric power amount as recorded in the past" and the "number of times of recording" corresponding to operation state pattern A are "1 499 kW (= 13 491 kW / 9)" and "9", respectively. If operation state pattern A is newly observed exactly at 1:00, and the increase (that is, the amount of electric power consumed by the load appliances as a whole from 0:59:30 to 1:00:00) is 1 509 kW, the data stored in the "average value" column 47 and the "average number of times" column 48 corresponding to operation state pattern A are updated to "1 500 kW (= (13 491 kW + 1 509 kW) / 10)" and "10", respectively, as shown in Fig 6.

If an operation state pattern the same as operation state pattern A exists in the information table, the store controller 12 calculates the maximum increase in consumed electric power amount by performing maximum value processing, and stores the thus calculated value in the "maximum value" column 49 corresponding to operation state pattern A.

Through the maximum value processing, the maximum increase in consumed electric power amount as previously stored in the "maximum value" column 49 is compared with the increase (the same as the "increase" in formula (1)) calculated based on the consumed electric power amounts acquired from the power meter 11 this time and last time and, if the increase is greater than the previously stored maximum increase in consumed electric power amount, the increase is stored in the "maximum value" column 49 as a new value of the maximum increase in consumed electric power amount and the date on which the increase is acquired (the date on which it is stored) is stored in the "recoding date" column 50.

That is, in the "maximum value" column 49 corresponding to operation state pattern A is stored the maximum value (the maximum value based on history records) of the amount of electric power consumed by the load appliances as a whole in 30 seconds when the load appliances operate in the operation states represented by operation state pattern A described above.

Through the maximum value processing, even if the increase is smaller, the date, as stored in the "recoding date" column 50, on which the maximum increase in consumed electric power amount was observed in the past is compared with the date acquired this time, and, if the date acquired this time is one month or more newer than the date on which the maximum increase in consumed electric power amount was observed in the past, the increase is regarded as a new value of the maximum increase in consumed electric power amount, and the "maximum value" column 49 and the "recoding date" column 50 are updated. Here, the updating is performed by comparing the newly calculated average increase in consumed electric power amount with the increase and regarding whichever is greater as the maximum increase in consumed electric power amount.

If the acquired operation state pattern does not exist in the information table, a new storage area is secured in the information table, and this operation state pattern is stored in the corresponding columns in the newly secured storage area. Here, in the "average value" column 47 and the "maximum value" column 49 are stored the increases calculated based on the "consumed electric power amount acquired from the power meter 11 at the moment at which the operation state pattern was acquired", in the "average number of times" column 48 is stored "1", and in the "recoding date" column 50 is stored the date on which the consumed electric power amount was acquired.

In this way, the store controller 12 learns the operation states of the main load appliances every predetermined period, and constructs the information table.

The store controller 12 stores, in its internal storage device (unillustrated), the operation state pattern of the main load appliances as acquired last time, and if the operation state pattern acquired this time differs from the stored previous operation state pattern in other than the "time zone" column 30, recognizes that the operation states of the main load appliances have changed in the course of the prediction period (30 seconds). In this case, the acquired consumed electric power amount is influenced by the change in the operation state, and therefore the acquired operation state pattern and consumed electric power amount are not reflected in the information table.

Moreover, the store controller 12 does not previously prepare the storage area of the information table enough to cope with all the possible operation state patterns of the main load appliances, but gradually expands the storage area of the information table every time a new operation state pattern occurs. Different operation state patterns occur depending on the environmental conditions of the store, and many operation state patterns are possible but do not actually occur. Accordingly, by adopting a method of gradually expanding the storage area of the information table every time a new operation state pattern occurs as described above, it is possible to cut the storage area for operation state patterns that are possible but do not actually occur.

Next, how the store controller 12 predicts the consumed electric power amount of the load appliances as a whole for demand control will be described.

The store controller 12 updates the information table based on the operation state pattern of the main load appliances as acquired every prediction period, and, while assuming that that operation state pattern continues until the end of the 30 minutes' time span for demand control, predicts the consumed electric power amount of the load appliances as a whole. Incidentally, the prediction period is typically set to be 10 seconds to 1 minute; in Embodiment 2, it is set to be 30 seconds as described above.

Specifically, within the information table, whether or not the value in the "average number of times" column 48 corresponding to an operation state pattern the same as the acquired operation state pattern is 100 is checked. If the value in the "average number of times" column 48 has not yet reached 100, it is judged that learning has not yet fully done, and thus, for that operation state pattern, by using only the increase calculated based on the consumed electric power amount of the load appliances as a while as acquired from the power meter 11 immediately previously (that is, while assuming that the same electric consumption state continues), the consumed electric power amount at the end of the 30 minutes' time span is predicted. Specifically, by using only the consumed electric power amount of the load appliances as a whole as acquired from the power meter 11, the store controller 12 calculates the predicted consumed electric power amount at the end of the 30 minutes' time span according to formula (2) below.

$$\text{"Predicted consumed electric power amount"}$$

$$= (\text{"increase"} / \text{"predicted period"})$$

$$\times \text{"remaining period"}$$

$$+ \text{"consumed electric power amount up to the current moment"} \qquad (2)$$

Here, the "increase" in formula (2) is the same as that in formula (1). The "remaining period" is the period remaining from the current moment until the end of the 30 minutes' time span. The "consumed electric power amount up to the current moment" is the accumulated consumed electric power amount from the start of demand control up to the current moment.

For example, in a case where 4 minutes and 30 seconds has elapsed from the start of demand control, in formula (2), the "increase" is the increase in consumed electric power amount from 4 minutes after the start of demand control until 4 minutes and 30 seconds after the start of demand control, the "remaining period" is 1 530 seconds (= 30 minutes - 4 minutes and 30 seconds), and the "consumed electric power amount up to the current moment" is the accumulated consumed electric power amount from the start of demand control until 4 minutes and 30 seconds thereafter.

If the number of times in the "average number of times" column 48 corresponding to an operation state pattern (called operation state pattern B) the same as the acquired operation state pattern has reached 100, the consumed electric power amount at the end of the 30 minutes' time span is predicted based on the value in the "average value" column 47 or the "maximum value" column 49 corresponding to operation state pattern B.

Specifically, if the period remaining until the end of the 30 minutes' time span is long, for example if it is 10 minutes or more, the average increase in consumed electric power amount stored in the "average value" column 47 corresponding to operation state pattern B is read out, and, if the remaining period is short, for example if it is less than 10 minutes, the maximum increase in consumed electric power amount stored in the "maximum value" column 49 corresponding to operation state pattern B is read out, and then the predicted consumed electric power amount of the load appliances as a whole at the end of the 30 minutes' time span is calculated based on formula (3) below.

$$\text{"Predicted consumed electric power amount"}$$

$$= (\text{"increase"} / \text{"predicted period"})$$

$$\times \text{"remaining period"}$$

$$+ \text{"consumed electric power amount up to the current moment"} \qquad (3)$$

As the increase in formula (3), if the remaining period is 10 minutes or more, the average increase in consumed electric power amount is adopted, and, if the remaining period is less than 10 minutes, the maximum increase in consumed electric power amount is adopted.

If the remaining period is 10 minutes or more, based on the average increase in consumed electric power amount corresponding to operation state pattern B, and according to formula (3), the predicted consumed electric power amount is calculated.

If the remaining period is less than 10 minutes, based on the maximum increase in consumed electric power amount corresponding to operation state pattern B, and according to formula (3), the predicted consumed electric power amount is calculated.

In the demand control apparatus of Embodiment 2, based on the predicted consumed electric power amount calculated by the method described above, the store controller 12 controls the main load appliances it manages, for example, in the following manner.

If the predicted consumed electric power amount is greater than a previously set value, it is judged that the contracted electric power amount is likely to be exceeded, and, to prevent that, air conditioners are so controlled that their operation is stopped according to predetermined rules. These rules are previously set; which air conditioners to stop may be varied according to the degree by which the predetermined value is exceeded; the air conditioners may be stopped in previously determined order of priority; which air conditioners to stop may be rotated in previously determined order so that all air conditioners are stopped evenly. Alternatively, the operation of the showcases 16 or the refrigerator 15 may be stopped. This, however, may adversely affect the storage condition of the foods stored in the showcases 16, and therefore, in Embodiment 2, the operation of the air conditioner 17 is stopped.

If the period remaining until the end of the 30 minutes' time span is longer than 10 minutes, there is an ample margin up to the end, and therefore demand control is performed with an ample margin to give priority to maintaining the comfort in the store or facility. By contrast, if the remaining period is less than 10 minutes and is thus short, control is so performed as to reduce the consumed electric power amount as early as possible, with priority given to preventing the consumed electric power amount from exceeding the predetermined value.

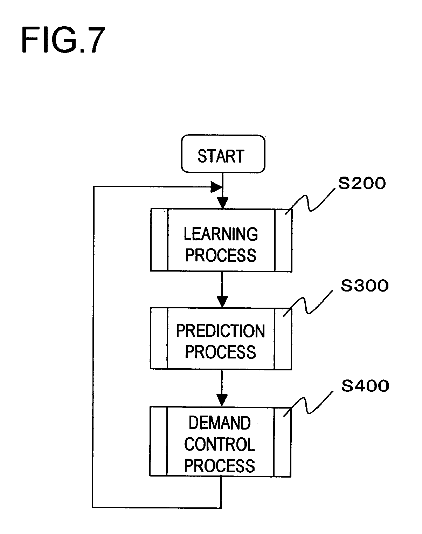

Fig. 7 is a flow chat of the demand control operation performed by the store controller 12.

In step S200, the store controller 12 learns the operation states of main load appliances and the amount of electric power consumed by load appliances as a whole at that time. Specifically, every prediction period, the store controller 12 acquires the operation state pattern of the main load appliances and the consumed electric power amount of the load appliances as a whole, and constructs the information table shown in Fig. 6.

In step S300, based on "the operation state pattern of the main load appliances and the consumed electric power amount of the load appliances as a whole" acquired in step S200 (if the average number of times is less than 100), or based on the operation state pattern acquired in step S200 and the average increase in consumed electric power amount or maximum increase in consumed electric power amount corresponding to that operation state pattern as stored in the information table, the store controller 12 calculates a predicted consumed electric power amount of the load appliances as a whole.

Next, in step S400, based on the predicted consumed electric power amount, the store controller 12 controls the operation of the load appliances it manages in such a way that the contracted electric power amount is not exceeded within the set time span.

Every prediction period, the store controller 12 repeats steps S200, S300, and S400.

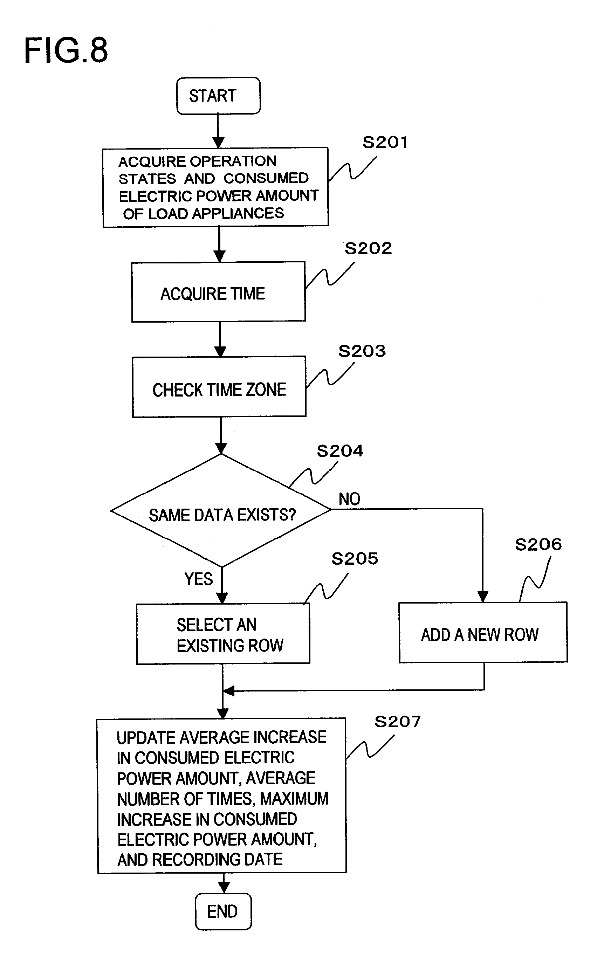

Fig. 8 is a flow chart showing in detail the operation that the store controller 12 performs in the learning process that it performs in step S200 shown in Fig 7.

In step 201, the store controller 12 acquires from the main load appliances the discrimination information of the operation states thereof, and acquires from the power meter 11 the consumed electric power amount of the load appliances as a whole. The operation flow then proceeds to step S202.

In step S202, the store controller 12 acquires, by its own clock function, the time at which the discrimination information and the consumed electric power amount were acquired. The operation flow then proceeds to step S203.

In step S203, which time zone the acquired time belongs to is checked. The operation flow then proceeds to step S204.

In step S204, the information table is searched to check whether or not an operation state pattern exists therein that is the same as that consisting of the "acquired operation states of the main load appliances" and "the calculated time zone". In this checking, a method may be adopted that ignores the sameness of the time zone. If the same operation state pattern exists, the operation flow proceeds to step S205, and otherwise it proceeds to step S206.

In step S205, the row (like row 51 in Fig. 6) of the information table where the same operation state pattern as the acquired operation state pattern exists is selected, and the operation flow proceeds to step S207.

In step S206, a new row is added to the information table as a storage area for storing the acquired new operation state pattern and the values calculated from the acquired new consumed electric power amount, and the acquired new operation state pattern is stored in the new row. The operation flow then proceeds to step S207.

In step S207, "the average increase in consumed electric power amount of the load appliances as a whole, the average number of times, the maximum increase in consumed electric power amount, and the date and time at which the maximum increase in consumed electric power amount was observed" corresponding to the operation state pattern in the row selected in step S205 or in the row added in step S206 is updated (or newly stored).

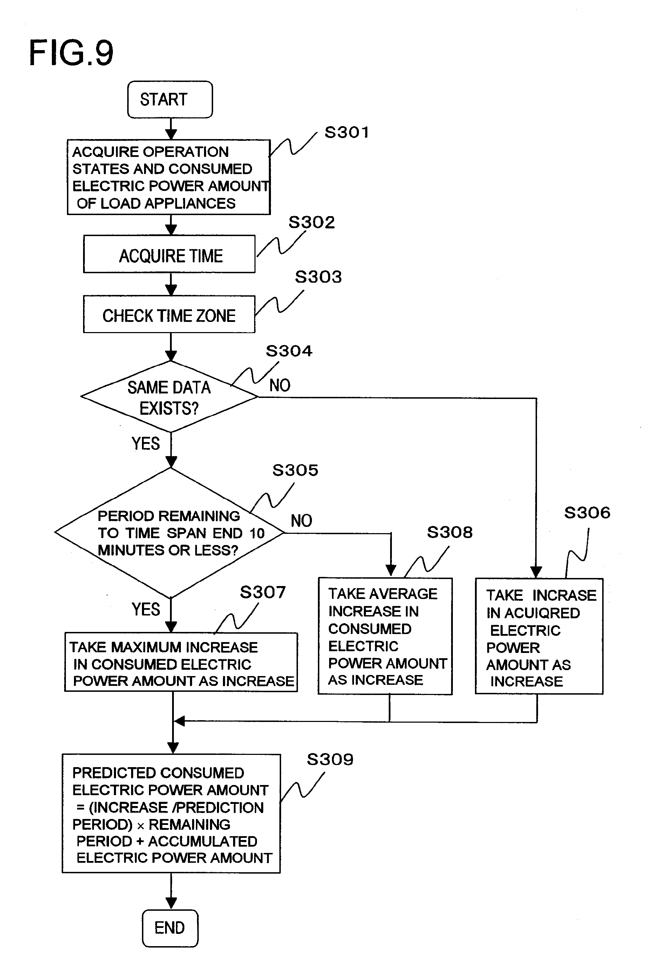

Fig. 9 is a flow chart showing in detail the operation that the store controller 12 performs in the prediction process that it performs in step S300 shown in Fig 7.

In step S301, the store controller 12 acquires from the main load appliances the discrimination information of their operation states, and acquires from the power meter 11 the consumed electric power amount of the load appliances as a whole. The operation flow then proceeds to step S302.

In step S302, the store controller 12 acquires, by its own clock function, the time at which the discrimination information and the consumed electric power amount were acquired. The operation flow then proceeds to step S303.

In step S303, which time zone the acquired time belongs to is checked. The operation flow then proceeds to step S304.

In step S304, the information table is searched to check whether or not an operation state pattern exists therein that is the same as that consisting of the acquired operation states of the main load appliances and the calculated time zone. In this checking, a method may be adopted that ignores the sameness of the time zone. If the same operation state pattern exists, the operation flow proceeds to step S305, and otherwise it proceeds to step S306. However, even if the same operation state pattern exists, if the "average number of times" corresponding to that operation state pattern is less than 100, learning is found to be insufficient, and the operation flow proceeds to step S306.

In step S305, whether or not the period remaining until the end of the set time span is 10 minutes or less is checked; if so, the operation flow proceeds to step S307, and otherwise it proceeds to step S308.

In step S306, based on the acquired consumed electric power amount of the load appliances as a whole, the increase in the consumed electric power amount in the prediction period is calculated. The operation flow then proceeds to step S309.

In step S307, as the increase, the maximum increase in consumed electric power amount corresponding to the same operation state pattern in the information table as the acquired operation state pattern is taken. The operation flow then proceeds to step S 309.

In step S308, as the increase, the average increase in consumed electric power amount corresponding to the same operation state pattern in the information table as the acquired operation state pattern is taken. The operation flow then proceeds to step S 309.

In step S309, based on formula (2) or (3) noted previously, the predicted consumed electric power amount of the load appliances as a whole at the end of the set time span is calculated.

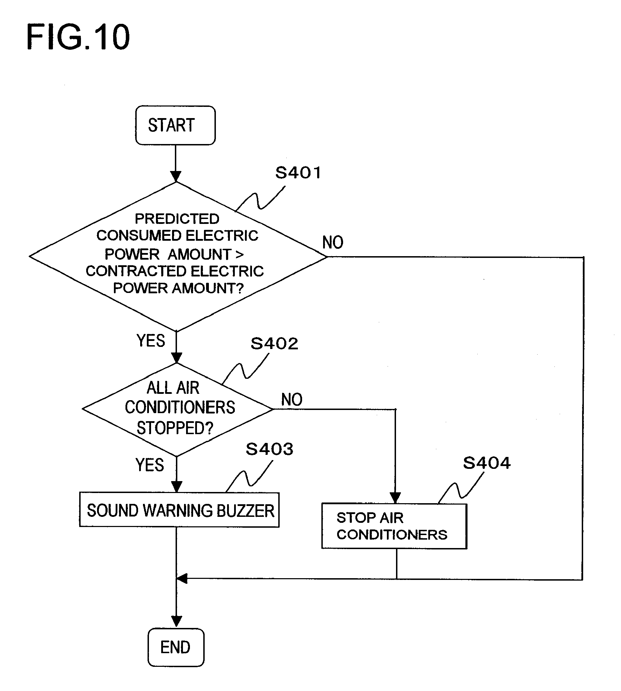

Fig. 10 is a flow chart showing in detail the operation that the store controller 12 performs in the demand control process that it performs in step S400 shown in Fig 7.

In Step 401, whether or not the predicted consumed electric power amount calculated in step S309 shown in Fig. 9 exceeds the contracted electric power amount, that is, the amount of electric power that the electric power supplier contracted to supply, is checked. If the contracted electric power amount is exceeded, the operation flow proceeds to step S402, and otherwise it ends.

In step S402, in a case where a plurality of air conditioners 17 are provided, whether or not all the air conditioners 17 are stopped is checked. If so, the operation flow proceeds to step S403, and otherwise it proceeds to step S404.

In step S403, a warning buzzer (unillustrated) provided in the store controller 12 is sounded to warn the storekeeper or the like.

In step S404, all the air conditioners 17 are stopped.

As described above, in Embodiment 2, the store controller 12 serving as a demand control apparatus learns the operation states of the main load appliances it manages and "the average increase in consumed electric power amount, the maximum increase in consumed electric power amount, and the increase in consumed electric power amount of the load appliances as a whole" at that time, and constructs information table.

Moreover, based on the average increase in consumed electric power amount or maximum increase in consumed electric power amount stored in the information table as corresponding to the acquired operation state pattern of the main load appliances, or based on the increase in consumed electric power amount calculated from the acquired consumed electric power amount of the load appliances as a whole, the store controller 12 calculates the predicted consumed electric power amount at the end of the set time span.

Furthermore, if the predicted consumed electric power amount exceeds the contracted electric power amount, the store controller 12 stops the main load appliances, for example air conditioners, that it manages.

In Embodiment 2, the store controller 12 does not manage or control all the load appliances in a store. Thus, even if the operation states of the main load appliances that the store controller 12 manages are the same, under the influence of the electric power consumption of the load appliances that the store controller 12 does not mange, the consumed electric power amount of the load appliances as a whole may vary. In such a case, if the consumed electric power amount at the end of the 30 minutes' time span is predicted based solely on the average increase in consumed electric power amount of the load appliances as a whole based on the operation states of the main load appliances, and demand control is performed based on the results of that prediction, the actual consumed electric power amount may exceed the predicted consumed electric power amount. Even in such a case, if the period remaining until the end of the 30 minutes' time span is long, by calculating the predicted consumed electric power amount again and correcting the demand control, it is possible to perform control in such a way that the contracted electric power amount is not exceeded at the end of the 30 minutes' time span. However, if the period remaining until the end of the 30 minutes' time span is short, even if the predicted consumed electric power amount is calculated again and the demand control is corrected, the contracted electric power amount may be exceeded at the end of the 30 minutes' time span.

Out of this consideration, in Embodiment 2, if the period remaining until the end of the 30 minutes' time span is short as described above, instead of the average increase in consumed electric power amount, the maximum increase in consumed electric power amount is adopted to calculate the predicted consumed electric power amount. Thus, even if the actual consumed electric power amount slightly increases, it is possible to prevent the actual accumulated consumed electric power amount at the end of the 30 minutes' time span from exceeding the predicted consumed electric power amount.

One cause that varies the relationship between the operation states of the main load appliances and the consumed electric power amount of the load appliances as a whole is considered to be the influence of differences in time zone. For example, the operation states and the consumed electric power amounts of the showcases 16 and the refrigerator 15 are influenced by how foods are displayed in the showcase and how many people are present in the store, and how foods are displayed in the showcase and how many people are present in the store depends on the time zone. Moreover, the load appliances other than those managed by the store controller 12 also are highly likely to depend on the time zone. Thus, by classifying the operation states of the main load appliances by the time zone as in Embodiment 2, it is possible to accurately calculate the predicted consumed electric power amount.

When the showcase No. 1 or No. 2 is performing defrosting operation, even if the predicted consumed electric power amount is calculated based on the operation state pattern thereof, as a result of pull-down operation being performed at an unexpected time, the actually consumed electric power amount may exceed the predicted consumed electric power amount. This may delay the response of demand control.

Thus, in Embodiment 2, when the showcase No. 1 or (and) No. 2 is performing defrosting operation, the predicted consumed electric power amount calculated based on the operation state pattern that it assumes when having switched to pull-down operation is compared with the predicted consumed electric power amount calculated based on the operation state pattern that it assumes when performing defrosting operation so that, if the former (the predicted consumed electric power amount when performing pull-down operation) is greater, this may be adopted as the predicted consumed electric power amount that is eventually predicted. In this process too, whether to use the maximum increase in consumed electric power amount or the average increase in consumed electric power amount is determined according to the rules of the remaining period.

Moreover, in Embodiment 2, as the main load appliances, the showcases 16, the air conditioner 17, and the outdoor unit 18 are adopted. Additionally or alternatively, the lighting appliance 13, which consumes a large proportion of the amount of electric power consumed in the store or facility, or any other load appliance 14 may be adopted.

Moreover, in Embodiment 2, the operation state pattern of the main load appliances is expressed, except for the time zone, by a sequence of "ON"s and "OFF"s each representing the state of one individual item (operation pattern) on a binary basis. In actual software, they are represented by "1"s and "0"s. Since each item can be expressed by "ON" or "OFF", each item may be allocated one bit on software memory. Quite naturally, this, compared with allocating each item one byte or something, helps save the capacity of memory needed. It also makes it easy to deal with the learned data in a search of the information table for a operation state pattern. In Fig. 6, the time zone stored in the "time zone" column 30 is expressed as "0:00 to 2:00". In this case, since one day consists of 24 hours, all the possible time zones can be identified by twelve values from 0 to 11. Thus, the time zone may be expressed in four bits.

**Third Embodiment**

A third embodiment (Embodiment 3) of the present invention will be described below with reference to the relevant drawings.

How a demand control apparatus and load appliances are interconnected in Embodiment 3 is basically the same as how they are interconnected in Embodiment 1, that is, as shown in Fig. 2. Accordingly, no explanation will be repeated of such features of the interconnection among the demand control apparatus and the load appliances and of the operation of the load appliances in Embodiment 3 as are common to Embodiments 1 and 3. Moreover, the learning process, prediction process, and demand control process in Embodiment 3 are basically the same as those in Embodiment 2. Accordingly, no explanation will be repeated of such parts of those three processes as are common to Embodiments 2 and 3.

As described previously, the showcases 16, after performing defrosting operation, perform pull-down operation until their interior temperatures, which have been high as a result of heating, fall down to a predetermined set value.

The amount of electric power consumed for pull-down operation is large even in comparison with that consumed for heating operation after defrosting operation. In a case where a plurality of showcases 16 are provided, if a large part of the showcases 16 start performing pull-down operation simultaneously, the amount of electric power consumed by the refrigerator 15 sharply increases. Thus, whether or not the showcases 16 are performing pull-down operation has not a small influence on the prediction of the consumed electric power amount of the load appliances as a whole.

On the other hand, how long the individual showcases 16 take to start pull-down operation after starting the defrosting operation and how long they perform pull-down operation depend on the individual differences among the showcases 16, the environment in which the showcases 16 are installed, and other factors. Thus, not only is it impossible to previously grasp those parameters, they also vary in extremely wide ranges. When the constructing of the information table shown in Fig. 6 is considered from this perspective, for example, the operation state pattern acquired in step 5201 in Fig. 8 or the like is highly likely to be slightly different even from that in the same time zone on the previous day. As a result, more often than not, the operation flow branches from step S204 to step S206, that is, a new row is added to the information table. This hugely increases the amount of information stored in the information table, and thus increases the time and the amount of memory needed to perform a search.

Thus, in Embodiment 3, to exclude the influence of variations as described above, the operation state (driving state) of the showcases in the chronological direction is modeled to create a model pattern. For this modeling, in consideration of the influence on the actually consumed electric power amount, attention is paid to pull-down operation and to "defrosting and draining operation" of showcases, which all have not a small influence on the prediction of the consumed electric power amount of the load appliances as a whole. In the following description, a model that pays attention to such operation is referred to as a "defrosting model". Incidentally, draining operation denotes operation performed to drain, out of a showcase, the water produced from ice melting as a result of defrosting operation.

Specifically, instead of the acquisition of the operation states of the load appliances performed in step 201 in Fig. 8, while a schedule of defrosting operation (hereinafter referred to as the "defrosting operation schedule") is referred to, the above defrosting model is applied to create, as a model, the operation states of individual showcases (a thus created model will be referred to as an "operation state model"). Then, assuming that the operation states of the showcases are those shown in the operation state model, the information of the operation state model is referred to. Thus, in Embodiment 3, it is no longer necessary to use information on, for example, whether or not particular showcases 16 are performing pull-down operation as the store controller 12 is notified of by the controllers of the showcases 16 in Embodiments 1 and 2.

Specifically, in the defrosting model, the periods needed for defrosting operation, draining operation, and pull-down operation are previously set. These needed periods are set at optimum values through experiments, measurements, and the like. In Embodiment 3, they are set at 5 minutes, 10 minutes, and 30 minutes, respectively. These settings may be varied from one showcase to another. By using this defrosting model and the defrosting operation schedule, the operation state models of the showcases at different times are created. Based on these operation state models, it is possible to suppose which showcase is in what state at what time.

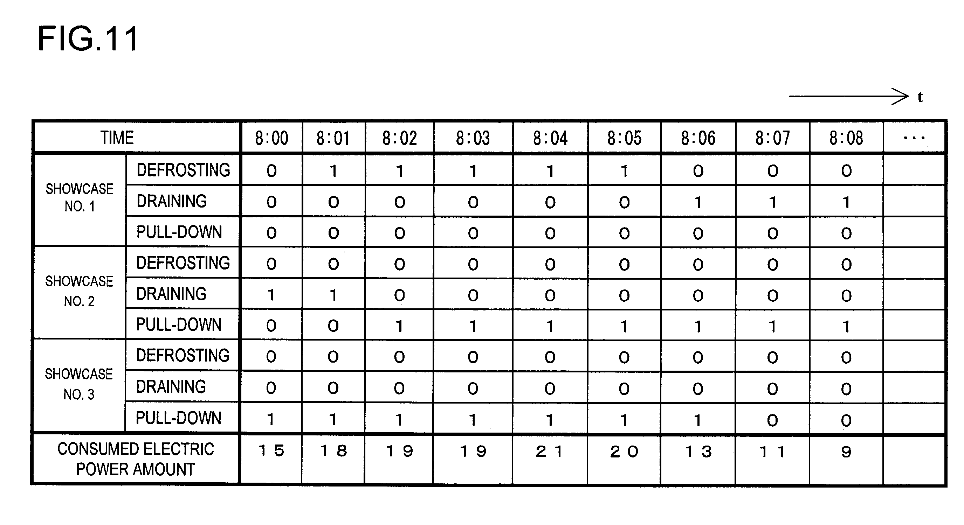

Fig. 11 shows a table containing the operation state models thus created. This table corresponds to the schematic diagram of the information table in Embodiment 1, and represents a representative pattern of the chronological change of the operation states of the showcases. In Embodiment 3, it is assumed that there are provided a plurality of showcases, for example three, namely showcase No. 1, showcase No. 2, and showcase No. 3 (none is illustrated). In the vertical axis direction, the different states of the individual showcases are arranged. A "1" in the table indicates that the relevant showcase is in the relevant state. For example, at 8:02, showcase No. 1 is in a defrosting state (a state in which it is performing defrosting operation), and showcases Nos. 2 and 3 are in a pull-down state (a state in which they are performing pull-down operation).

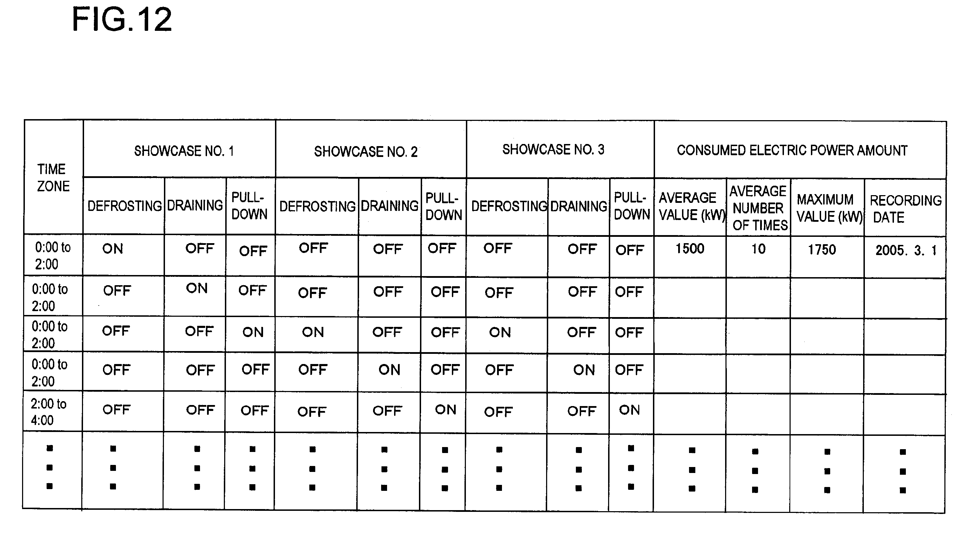

Fig. 12 shows a second table in Embodiment 3, and corresponds to Fig. 6 in Embodiment 2. Average values and maximum values in the table are all those calculated for one minute. Although not illustrated in Embodiment 3, the second table may further contain the operation states of load appliances other than the showcases, for example an air conditioner and an outdoor unit, as acquired via the communication section 25 shown in Fig. 3.

For the sake of convenience, in the second table of Embodiment 3, cases involving NSB and DSB are omitted. As described above, the defrosting model takes draining operation into consideration. As described previously, the information on whether the defrosting, draining, and pull-down operation of each showcase is on or off stored in the second table (information table) depends on the operation state models of the showcases created by applying the defrosting model to the defrosting operation schedule. This will be made clear in the course of the detailed description of the operation flow given later.

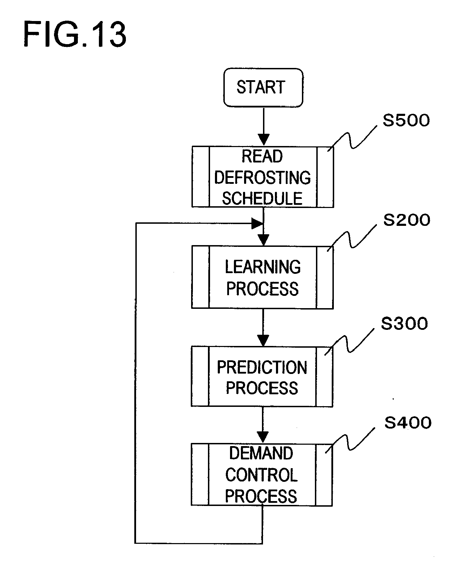

Fig. 13 shows a flow chart of the demand control operation performed by the store controller 12 in Embodiment 3. In Embodiment 3, after the process in step S500 is executed, the loop (steps S200 to S400) in the operation flow is executed every one minute. The following description of Embodiment 3 deals with a case where demand control is performed in units of 30 minutes. Accordingly, in the following description, the moment 30 minutes after the start of demand control will be referred to as the end time, and the current moment within that 30 minutes' period as the current time (in the range from 0 to 29 minutes). In Embodiment 3, as compared with Embodiment 2 as shown in Fig. 7, step S500 is added.

In step 500, the defrosting schedule set in the store controller 12 is read out. Then, the defrosting model is applied to it to create operation state models as shown in Fig. 11. The schedule that sets out which showcase performs defrosting, draining, and pull-down operation at what time is called the defrosting operation schedule, and is previously set and stored in the store controller 12. The defrosting operation schedule is determined with distributed execution of different operation taken into consideration so that the peaks of the electric power consumption of many showcases do not overlap. The defrosting operation schedule is set in the store controller 12, but may be set in the controllers of the showcases 16 instead.

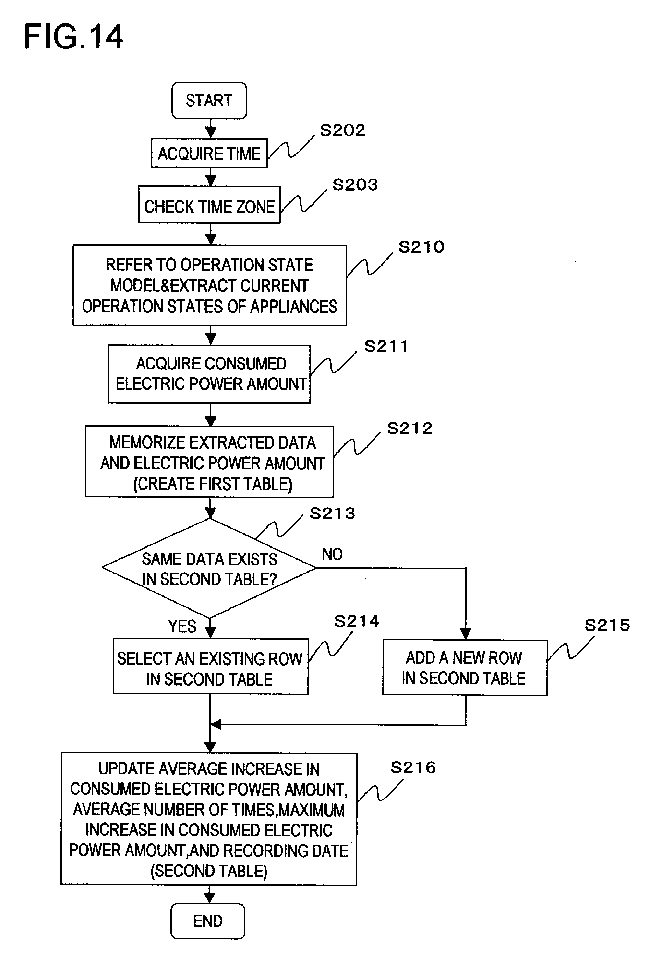

Fig. 14 is a flow chart showing in detail the operation that the store controller 12 performs in the learning process that it performs in step S200 shown in Fig 13. As compared with the case shown in Fig. 8 in connection with Embodiment 2, no step comparable with step S201 there is performed here. This is because, as described previously, in Embodiment 3, it is unnecessary to acquire the actual operation states of the load appliances. Moreover, As compared with the case shown in Fig. 8, steps S210 to S212 are added here. Now, with special attention paid to these steps, a detailed description will be given below.

In step S202, the store controller 12 acquires the time of the current moment. Subsequently, in step S203, which time zone the acquired time belongs to is checked. The operation flow then proceeds to step S210.

In step S210, while the current time acquired in step S202 is referred to, the current operation states (the driving states) of the showcases are extracted from the operation state model created in step S500. For example, if the current time is 8:02, the extracted operation states are such that showcase No. 1 is performing defrosting operation, and the showcases Nos. 2 and 3 are performing pull-down operation (see Fig 11).

Subsequently to step S210, in step S211, the current consumed electric power amount of the load appliances as a whole is acquired from the power meter 11. The operation flow then proceeds to step S212.

In step S212, the items of information acquired in steps S202, S203, S210, and S211 are stored, in association with one another, in a memory. The table (table data) constructed with the thus stored data is referred to as the first table (unillustrated). The first table is created with data extracted from the table shown in Fig. 11. Thus, like the table shown in Fig. 11, the first table reflects a representative pattern of the chronological change of the operation states of the showcases.

Moreover, the first table stores one week worth of data. On the other hand, the operation state model created in step S500 contains no data on dates. That is, the operation state model is a collection of data that identifies the operation states of the showcases within a day. Thus, although the first table stores a one week worth of data, the operation states of the showcases associated with the same time (for example, 8:02) in the first table are the same regardless of the dates. By contrast, the data of the consumed electric power amount acquired in step S211 is accumulated in the first table for a week. After one week worth data of the consumed electric power amount has been stored in the first table, it keeps getting overwritten with new data starting from the oldest part thereof.

Although not used in Embodiment 3, the first table may further contain the operation states of load appliances other than the showcases, for example an air conditioner and an outdoor unit, as acquired via the communication section 25 shown in Fig. 3.

On completion of step S212, the operation flow proceeds to step S213. In steps S213 to S215, processes comparable with those performed in steps S204 to S206 in Embodiment 2 are performed.

In step S213, it is checked whether or not there exists, in the second table (information table) an operation state pattern the same as "the operation state pattern consisting of the operation state of the showcases and the time zone associated with that operation state (that is, the operation state of the showcases and the time zone stored in the first table immediately previously)" stored in the first table. In this checking, a method may be adopted that ignores the sameness of the time zone. If the same operation state pattern exists, the row in the second table (information table) where that operation state pattern is stored is identified, and the operation flow proceeds to step S214; otherwise it proceeds to S215.

In step S214, the row (existing row) in the second table (information table) in which the same operation state pattern is stored is selected, and the operation flow proceeds to step S216. In step S215, a new row is added to the second table as an area to store the acquired new operation state pattern and the value calculated from the consumed electric power amount, and the acquire new operation state pattern is stored in that new row. The operation flow then proceeds to step S216.

In step S216, a processes comparable with that performed in step S207 in Embodiment 2 is performed. In step S216, the operation state pattern and "the average increase in consumed electric power amount of the load appliances as a whole, the average number of times, the maximum increase in consumed electric power amount, and the date on which the maximum increase in consumed electric power amount occurred" corresponding thereto is stored in the second table while being classified by the time zone.

Specifically, by using the data of the consumed electric power amount stored in the first table, "the average increase in consumed electric power amount of the load appliances as a whole, the average number of times, the maximum increase in consumed electric power amount, and the date on which the maximum increase in consumed electric power amount occurred" corresponding to the operation state pattern stored in the row selected in step S214 or added in step S215 in the second table are updated (or newly stored). The average increase in consumed electric power amount, the average number of times, the maximum increase in consumed electric power amount, and the date on which the maximum increase in consumed electric power amount occurred are the same as those described in connection with Embodiment 2, and are determined according to the rules described in connection with Embodiment 2.

The second table corresponds to the information table created in step S207 (Fig. 8) in Embodiment 2, but its contents (see Fig. 12) differ from those in Embodiment 2. Although not shown in Figs. 13 and 14, in practice, step S216 is executed every two hours so that the updating of the second table for that two hours' period is performed all at once (for this reason, in Embodiment 3, a method is adopted whereby the data of the consumed electric power amount acquired in step S211 every one minute is first stored in the first table). The updating is performed, for example, exactly at 8:00, exactly at 10:00, and so forth.

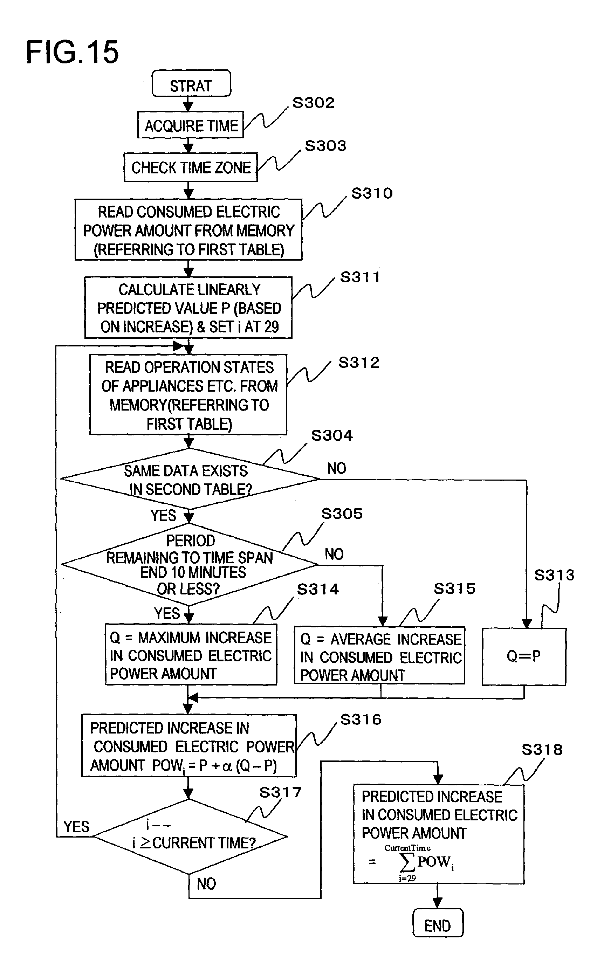

Fig. 15 is a flow chart showing in detail the operation that the store controller 12 performs in the consumed electric power amount prediction process that it performs in step S300 shown in Fig 13. As compared with the case shown in Fig. 9 in connection with Embodiment 2, no step comparable with step S301 there is performed here. This is because, as described previously, in Embodiment 3, it is unnecessary to acquire the actual operation states of the load appliances. Moreover, as compared with the case shown in Fig. 8, steps S310 to S312 and steps S317 and S318 are added here. Incidentally, steps S313 to 5316 are comparable with steps S306 to S309 in Embodiment 2. Now, a detailed description of these steps will be given below.

First, in step S302, the store controller 12 acquires the time of the current moment, and subsequently, in step S303, it checks which time zone the acquired time belongs to. The operation flow then proceeds to step S310. In step S310, the consumed electric power amount of the load appliances as a whole at that time (current moment) is read from the first table. The operation flow then proceeds to step S311.

In step S311, by using the difference (differential electric power amount) between the accumulated electric power amount one minute immediately before and the accumulated electric power amount at the current moment, through linearly prediction, the predicted amount of electric power expected to be consumed until one minute after the current moment is calculated (this predicted consumed electric power amount is referred to as the linearly predicted value P). The linearly predicted value P is made equal to the above difference (differential electric power amount). A loop timer "i" is set at 29, and then the operation flow proceeds to step S312. The value of the loop timer "i" virtually represents the lapse of time (that is, the time of the current moment mentioned above) after the start of demand control, which is performed in units of 30 minutes.

In step S312, the operation states of the showcases and the like at a particular moment are read out from the first table. For example in a case where the start time of demand control, which is performed in units of 30 minutes, is 8:00 and the time of the current moment is 8:10, if i = 29, the operation states of the showcases and the like (excluding the data of the consumed electric power amount) corresponding to 8:29 are read out from the first table, and, if i = 28, the operation states of the showcases and the like (excluding the data of the consumed electric power amount) corresponding to 8:28 are read out from the first table. A similar operation is performed when i ≤ 27. The loop timer "i" represents a future time later than the current moment, and, in the operation state model created by the application of the defrosting model and in the first table based on the operation state model, there are stored the operation states of the load appliances and the like as are expected in the future. This makes it possible to perform reading as described above.

Incidentally, as described previously, the first table stores one week worth of data, but the operation states of the showcases associated with the same time (for example 8:02) are the same irrespective with the dates. Thus, in the numerical examples described above, if i = 29, the operation states of the showcases and the like (excluding the data of the consumed electric power amount) corresponding to 8:29 on an arbitrary date are read out from the first table.

On completion of step S312, the operation flow proceeds to step S304. In step S304, a processes comparable with that performed in Embodiment 2 is performed. Specifically, the second table is searched to check whether or not there exists therein an operation state pattern the same as "the operation state pattern consisting of the operation states of the showcases and the time zone associated with those operation states" read in step S312. In this checking, a method may be adopted that ignores the sameness of the time zone. If the same operation state pattern exists, the operation flow proceeds to step S305, and otherwise it proceeds to S313. However, even if the same operation state pattern exists, if the "average number of times" corresponding to that operation state pattern is less than a predetermined number (for example, 10), learning is found to be insufficient, and the operation flow proceeds to step S313. In the following description, the operation state pattern in the second table that has been judged to be the same will be referred to as operation state pattern C.

In step S305, whether or not the current time is within 10 minutes of the end time (the end time of the 30 minutes' time span); if it is within 10 minutes, the operation flow proceeds to step S314, and otherwise it proceeds to step S315.

In steps S313 to S315, processes comparable with those performed in Embodiment 2 are performed. In step S313, the linearly predicted value P calculated in step S311 is used as (substituted for) a table prediction value Q, and the operation flow then proceeds to step S316.

In step S314, the maximum increase in consumed electric power amount corresponding to operation state pattern C in the second table is used as (substituted for) the table prediction value Q, and the operation flow then proceeds to step S316. The table prediction value Q determined in step S314 represents the maximum amount of electric power consumed in one minute by the load appliances as a whole as assumed when the load appliances operate in the operation states corresponding to the operation state pattern C.

In step S315, the average increase in consumed electric power amount corresponding to operation state pattern C in the second table is used as (substituted for) the table prediction value Q, and the operation flow then proceeds to step S316. The table prediction value Q determined in step S315 represents the average amount of electric power consumed in one minute by the load appliances as a whole as assumed when the load appliances operate in the operation states corresponding to the operation state pattern C.

In step S316, a predicted value $POW_i$ of the amount of electric power expected to be consumed in one minutes by the load appliances as a whole. The subscript "i" in the predicted value $POW_i$ represents the value of the loop timer "i", and "i" takes a value in the range from 0 to 29. Specifically, the predicted value $POW_i$ is determined as the value obtained by adding up the linearly predicted value P and the value obtained by weighting by a factor of $\alpha$ the difference between the table prediction value Q and the linearly predicted value P (that is, $POW_i = P + \alpha (Q - P)$). The value of $\alpha$ can be customized to the optimum value that suits the environment of the target of control. In principle, $\alpha$ is set to fulfill "$0 < \alpha < 1$", but it may be equal to 0 or 1.

When the above predicted value $POW_i$ in one minute is calculated, the average value or maximum value (let this be P') of the linearly predicted value P for a predetermined period in the past may be used. In that case, the calculation formula that can be used is $POW_i = P + \alpha(Q - P')$.

As described above, in this embodiment, mainly the linearly predicted value P is used to predict a consumed electric power amount in the future, and the predicted value (table prediction value Q) based on the second table is used to correct the linearly predicted value P.

On completion of step S316, the operation flow proceeds to step S317, where the loop timer "i" is decremented by one, and "i" is compared with the current time (in minutes) mentioned above. If "i" is equal to or more than the current time, the operation flow returns to step S312. If "i" is less than the current time, the operation flow proceeds to step S318. That is, until the predicted value $POW_i$ is calculated for every one minute from the current time to the end time, the loop from step S312 to step S316 is repeated, and then the operation flow proceeds to step S318.

In step S318, the predicted values $POW_i$ from the current time to the end time is added up to calculate the increase in the predicted electric power consumption until the end time with respect to the consumed electric power amount at the current time. By adding this increase to the accumulated consumed electric power amount up to the current time as calculated from the value acquired in step S211 (Fig. 14), it is possible to calculate the predicted consumed electric power amount (accumulated consumed electric power amount) at the end time as calculated by assuming that it equals zero at the start of demand control.

Of the flow chart shown in Fig. 13, the part corresponding to the detailed operation of the store controller 12 in the demand control process in step S400 is the same as shown in the flow chart in Fig. 10. That is, the store controller 12 controls the load appliances appropriately based on the predicted consumed electric power amount (accumulated consumed electric power amount) at the end time mentioned above.

As described above, in Embodiment 3, with reference to the first table, which is created not based on the actual operation states of load appliances but based on an operation state model, the second table is constructed that serves as an information table. This makes it possible to reduce variations in the operation states of the load appliances as stored in the information table, and thus helps reduce the amount of information in the information table, and reduce the time and the amount of memory needed to perform a search. It is also possible to reduce the overhead associated with the communication between the demand control apparatus and the load appliances. Moreover, for example, as described above, by using the predicted consumed electric power amount obtained through linear prediction and the predicted consumed electric power amount obtained using the second table, and then calculating the predicted consumed electric power amount on a correcting basis by using the weighted average of those, it is expected to be possible to compensate for the drawbacks of prediction through linear prediction and prediction using the second table. Thus, it is possible to increase the accuracy of consumed electric power amount prediction.

The demand control apparatuses, and the consumed electric power amount prediction methods used therein, of the embodiments described above can be realized with hardware such as a CPU, a memory, and other LSIs (large-scale integration) incorporated in a computer, or with software such as a program loaded in a memory to achieve the function of demand control and the function of consumed electric power amount prediction. When the use of software is considered, Fig. 3 described earlier is a diagram showing the functional blocks of the demand control apparatus realized with hardware and software. Needless to say, those functional blocks may be realized with hardware alone, with software alone, with a combination thereof, or in many other ways.

In embodiments of the present invention, many modifications and variations are possible within the scope of the technical idea presented in the appended claims.

## Claims

1. A demand control apparatus for controlling a load appliance based on a predicted consumed electric power amount thereof, which is an amount of electric power expected to be consumed by the load appliance until an end of a unit period,
   **characterized in**
   **that** said demand control apparatus includes:

   table generating means for generating an information table relating to a history record of an actually consumed electric power amount, which is an amount of electric power actually consumed in a unit targeted by demand control; and
   prediction calculating means for calculating said predicted consumed electric power amount by using the information table generated by the table generating means.

2. The demand control apparatus of claim 1, wherein
   said table generating means includes
   storing means for storing in said information table, as a history record, a relationship between an operation state of, among load appliances within said targeted unit, a previously selected load appliance and the actually consumed electric power amount in said targeted unit observed at that time, and
   said prediction calculating means includes
   calculating means for identifying, in said information table, a history position corresponding to an operation state of said previously selected load appliance at a current moment and then calculating, based on said actually consumed electric power amount acquired from said information table following the identified history position, said predicted consumed electric power amount.

3. The demand control apparatus of claim 2, wherein
   said storing means stores in the information table, as information for identifying said history position, time information in association with said operation state and the actually consumed electric power amount at that time, and
   said calculating means, if a plurality of history positions corresponding to the operation state of said previously selected load appliance at the current moment are identified in said information table, selects, among the plurality of history positions, a history position at a moment closest to a current moment as a history position to be identified during calculation of said predicted consumed electric power amount.

4. The demand control apparatus of one of claims 2 and 3, wherein
   if no history position corresponding to the operation state of said previously selected load appliance at the current moment exists in said information table, said calculating means calculates said predicted consumed electric power amount through linear prediction based on a difference between said actually consumed electric power amount acquired immediately previously and said actually consumed electric power amount acquired at a current moment.

5. The demand control apparatus of one of claims 2 to 4, wherein
   only if said actually consumed electric power amount falls within a predetermined range with respect to an average value of a consumed electric power amount in said information table, said storing means stores in said information table that actually consumed electric power amount in association with said operation state.

6. The demand control apparatus of one of claims 2 to 5, wherein
   if said previously selected load appliance includes a refrigerator/freezer showcase,
   what is performed by said storing means includes storing in said information table, as a history record, a relationship between an operation state of the refrigerator/freezer showcase with respect to defrosting and cooling operation thereof and said actually consumed electric power amount.

7. The demand control apparatus of one of claims 2 to 6, wherein
   if said previously selected load appliance includes an air conditioner,
   what is performed by said storing means includes storing in said information table, as a history record, a relationship between an operation state of the air conditioner with respect to presence/absence and strength of operation thereof and said actually consumed electric power amount.

8. The demand control apparatus of claim 6, wherein
said storing means stores in said information table, in combination with said relationship, a difference between an interior temperature and a set temperature of the refrigerator/freezer showcase at that time.

9. The demand control apparatus of claim 1, wherein
in said information table are stored, in association with one another, an operation state of, among load appliances within said targeted unit, a previously selected load appliance, a first reference value, which is an average value of an increase in an actually consumed electric power amount in said targeted unit at that time, and/or a second reference value, which is greater than the first reference value, and
said prediction calculating means checks whether or not an operation state identical with an operation state of said previously selected load appliance at a current moment exists in said information table, and, if so, calculates said predicted consumed electric power amount based on said first or second reference value corresponding to that operation state.

10. The demand control apparatus of claim 1, wherein
in said information table are stored, in association with one another, one or two or more time zones, an operation state of, among load appliances within said targeted unit, a previously selected load appliance in each time zone, a first reference value, which is an average value of an increase in an actually consumed electric power amount in said targeted unit at that time, and/or a second reference value, which is greater than the first reference value, and
if a combination of a time zone to which a current moment belongs and an operation state of said previously selected load appliance at the current moment exists in said information table, said prediction calculating means calculates said predicted consumed electric power amount based on said first or second reference value corresponding to the combination of that time zone and that operation state.

11. The demand control apparatus of one of claims 9 and 10, wherein
said prediction calculating means further includes
remaining period calculating means for calculating a remaining period from a current moment to said end of the unit period, and
said prediction calculating means, if the remaining period is equal to or longer than a predetermined period, calculates said predicted consumed electric power amount based on said first reference value and, if the remaining period is shorter than the predetermined period, calculates said predicted consumed electric power amount based on said second reference value.

12. The demand control apparatus of one of claims 9 to 11, wherein
said previously selected load appliance includes a plurality of refrigerator/freezer showcases, and
the operation state of said previously selected load appliance includes, for each refrigerator/freezer showcase, an operation state in which pull-down operation is being performed.

13. The demand control apparatus of one of claims 9 to 12, wherein
said second reference value is a maximum value of an increase in the actually consumed electric power amount in said targeted unit.

14. A demand control apparatus for controlling a load appliance based on a predicted consumed electric power amount thereof, which is an amount of electric power expected to be consumed by the load appliance until an end of a unit period,
**characterized in**
**that** said demand control apparatus includes:

representative pattern generating means for generating a representative pattern table that describes a representative pattern of chronological change of an operation state of a load appliance within a unit targeted by demand control; and
prediction calculating means for calculating said predicted consumed electric power amount by using the representative pattern table generated by the representative pattern generating means.

15. The demand control apparatus of claim 14, wherein

the demand control apparatus further includes

linearly predicted consumed electric power amount calculating means for calculating, through linear prediction, a linearly predicted consumed electric power amount based on a difference between an actual consumed electric power amount acquired immediately previously and an actual consumed electric power amount at a current moment, and

the demand control apparatus calculates a corrected predicted consumed electric power amount by using said linearly predicted consumed electric power amount calculated by said linearly predicted consumed electric power amount calculating means and said predicted consumed electric power amount calculated by said prediction calculating means, and controls said load appliance based on the so calculated corrected predicted consumed electric power amount.

16. The demand control apparatus of claim 15, wherein
the demand control apparatus calculates the corrected predicted consumed electric power amount by calculating a weighted average of said linearly predicted consumed electric power amount and said predicted consumed electric power amount.

17. The demand control apparatus of one of claims 14 to 16, wherein
the demand control apparatus further includes
table generating means for generating an information table relating to a history record of an actually consumed electric power amount, which is an amount of electric power actually consumed in a unit targeted by demand control, in said information table are stored, in association with one another, an operation state of, among load appliances within said targeted unit, a previously selected load appliance, a first reference value, which is an average value of an increase in an actually consumed electric power amount in said targeted unit at that time, and/or a second reference value, which is greater than the first reference value, and
said prediction calculating means checks whether or not an operation state identical with an operation state of said previously selected load appliance at a current moment as acquired from said representative pattern table exists in said information table, and, if so, calculates said predicted consumed electric power amount based on said first or second reference value corresponding to that operation state.

18. The demand control apparatus of one of claims 14 to 16, wherein
the demand control apparatus further includes
table generating means for generating an information table relating to a history record of an actually consumed electric power amount, which is an amount of electric power actually consumed in a unit targeted by demand control, in said information table are stored, in association with one another, one or two or more time zones, an operation state of, among load appliances within said targeted unit, a previously selected load appliance in each time zone, a first reference value, which is an average value of an increase in an actually consumed electric power amount in said targeted unit at that time, and/or a second reference value, which is greater than the first reference value, and if a combination of a time zone to which a current moment belongs and an operation state of said previously selected load appliance at the current moment as acquired from said representative pattern table exists in said information table, said prediction calculating means calculates said predicted consumed electric power amount based on said first or second reference value corresponding to the combination of that time zone and that operation state.

19. The demand control apparatus of one of claims 17 and 18, wherein
said prediction calculating means further includes
remaining period calculating means for calculating a remaining period from a current moment to said end of the unit period, and
said prediction calculating means, if the remaining period is equal to or longer than a predetermined period, calculates said predicted consumed electric power amount based on said first reference value and, if the remaining period is shorter than the predetermined period, calculates said predicted consumed electric power amount based on said second reference value.

20. The demand control apparatus of one of claims 17 to 19, wherein
said previously selected load appliance includes a plurality of refrigerator/freezer showcases, and
the operation state of said previously selected load appliance includes, for each refrigerator/freezer showcase, an operation state in which pull-down operation is being performed.

21. The demand control apparatus of one of claims 17 to 20, wherein
said second reference value is a maximum value of an increase in the actually consumed electric power amount in said targeted unit.

22. An electric power consumption prediction method for calculating and acquiring a predicted consumed electric power amount, which is an amount of electric power predicted to be consumed within an electric-power-monitored unit until an end of a unit period,
**characterized in**
**that** said method includes
a step of calculating said predicted consumed electric power amount by using history information of an actually consumed electric power amount, which is an amount of electric power actually consumed in said electric-power-monitored unit.

23. The electric power consumption prediction method of claim 22, wherein
as said history information, information relating to a history record of an operation pattern of, among load appliances within said electric-power-monitored unit, a previously selected load appliance and an actually consumed electric power amount within said electric-power-monitored unit at that time is recorded is kept updated, and, by using that history information, said predicted consumed electric power amount is calculated.

24. The electric power consumption prediction method of claim 23, wherein
from said history information, an operation pattern corresponding to an operation pattern of said previously selected load appliance is identified, and, based on said actually consumed electric power amount in a history record thereafter, said predicted consumed electric power amount is calculated.

25. The electric power consumption prediction method of claim 22, wherein
said history information is constructed by storing in an information table, in association with one another, an operation state of, among load appliances within said electric-power-monitored unit, a previously selected load appliance, a first reference value, which is an average value of an increase in an actually consumed electric power amount in said electric-power-monitored unit at that time, and/or a second reference value, which is greater than the first reference value, and
whether or not an operation state identical with an operation state of said previously selected load appliance at a current moment exists in said information table is checked, and, if so, said predicted consumed electric power amount is calculated based on said first or second reference value corresponding to that operation state.

26. The electric power consumption prediction method of claim 22, wherein
said history information is constructed by storing in an information table, in association with one another, one or two or more time zones, an operation state of, among load appliances within said electric-power-monitored unit, a previously selected load appliance in each time zone, a first reference value, which is an average value of an increase in an actually consumed electric power amount in said electric-power-monitored unit at that time, and/or a second reference value, which is greater than the first reference value, and
whether or not a combination of a time zone to which a current moment belongs and an operation state of said previously selected load appliance at the current moment exists in said information table is checked, and, if so, said predicted consumed electric power amount is calculated based on said first or second reference value corresponding to the combination of that time zone and that operation state.

27. The electric power consumption prediction method of one of claims 25 and 26, wherein
a remaining period from a current moment to said end of the unit period is calculated, and
if the remaining period is equal to or longer than a predetermined period, said predicted consumed electric power amount is calculated based on said first reference value and,
if the remaining period is shorter than the predetermined period, said predicted consumed electric power amount is calculated based on said second reference value.

28. The electric power consumption prediction method of one of claims 25 to 27, wherein
said previously selected load appliance includes a plurality of refrigerator/freezer showcases, and
the operation state of said previously selected load appliance includes, for each refrigerator/freezer showcase, an operation state in which pull-down operation is being performed.

29. The electric power consumption prediction method of one of claims 25 to 28, wherein
said second reference value is a maximum value of an increase in the actually consumed electric power amount in said electric-power-monitored unit.

**30.** An electric power consumption prediction method for calculating and acquiring a predicted consumed electric power amount, which is an amount of electric power predicted to be consumed within an electric-power-monitored unit until an end of a unit period,
**characterized in**
**that** said method includes
a step of generating a representative pattern table that describes a representative pattern of chronological change of an operation state of a load appliance within the electric-power-monitored unit, and calculating said predicted consumed electric power amount by using the representative pattern table.

**31.** The electric power consumption prediction method of claim 30, wherein
an information table relating to a history record of an actually consumed electric power amount, which is an amount of electric power actually consumed in the electric-power-monitored unit, is generated,
in said information table are stored, in association with one another, an operation state of, among load appliances within said electric-power-monitored unit, a previously selected load appliance, a first reference value, which is an average value of an increase in an actually consumed electric power amount in said electric-power-monitored unit at that time, and/or a second reference value, which is greater than the first reference value, and
whether or not an operation state identical with an operation state of said previously selected load appliance at a current moment as acquired from said representative pattern table exists in said information table is checked, and, if so, said predicted consumed electric power amount is calculated based on said first or second reference value corresponding to that operation state.

**32.** The electric power consumption prediction method of claim 30, wherein an information table relating to a history record of an actually consumed electric power amount, which is an amount of electric power actually consumed in the electric-power-monitored unit, is generated,
in said information table are stored, in association with one another, one or two or more time zones, an operation state of, among load appliances within said electric-power-monitored unit, a previously selected load appliance in each time zone, a first reference value, which is an average value of an increase in an actually consumed electric power amount in said electric-power-monitored unit at that time, and/or a second reference value, which is greater than the first reference value, and
whether or not a combination of a time zone to which a current moment belongs and an operation state of said previously selected load appliance at the current moment as acquired from said representative pattern table exists in said information table is checked, and, if so, said predicted consumed electric power amount is calculated based on said first or second reference value corresponding to the combination of that time zone and that operation state.

**33.** The electric power consumption prediction method of one of claims 31 and 32, wherein
through linear prediction, a linearly predicted consumed electric power amount is calculated based on a difference between an actual consumed electric power amount acquired immediately previously and an actual consumed electric power amount at a current moment, and
a corrected predicted consumed electric power amount is calculated by using said calculated linearly predicted consumed electric power amount and said calculated predicted consumed electric power amount, or by using a weighted average of said calculated linearly predicted consumed electric power amount and said calculated predicted consumed electric power amount, and the so calculated corrected predicted consumed electric power amount is treated as a predicted consumed electric power amount to be eventually calculated by the electric power consumption prediction method.

**34.** The electric power consumption prediction method of one of claims 31 to 33, wherein
a remaining period from a current moment to said end of the unit period is calculated, and
if the remaining period is equal to or longer than a predetermined period, said predicted consumed electric power amount is calculated based on said first reference value and,
if the remaining period is shorter than the predetermined period, said predicted consumed electric power amount is calculated based on said second reference value.

**35.** The electric power consumption prediction method of one of claims 31 to 34, wherein
said previously selected load appliance includes a plurality of refrigerator/freezer showcases, and
the operation state of said previously selected load appliance includes, for each refrigerator/freezer showcase, an operation state in which pull-down operation is being performed.

**36.** The electric power consumption prediction method of one of claims 31 to 35, wherein

said second reference value is a maximum value of an increase in the actually consumed electric power amount in said electric-power-monitored unit.

**37.** A program for making a computer perform functions of the individual means of the demand control apparatus of one of claims 1 to 21.

**38.** A program for making a computer execute the electric power consumption prediction method of one of claims 22 and 36.

# FIG.1

# FIG.2

POWER LINE

POWER SYSTEM

11 POWER METER

12 STORE CONTROLLER

13 LIGHTING APPLIANCE / CONTROLLER

14 ANOTHER LOAD APPLIANCE / CONTROLLER

17 AIR CONDITIONER / CONTROLLER

COMMUNICATION NETWORK

15 CONTROLLER / REFRIGERATOR

CONTROLLER / SHOWCASE

19

16

18 OUTDOOR UNIT

POWER LINE

EP 1 729 223 A2

# FIG.3

EP 1 729 223 A2

# FIG.4

HISTORY POSITION

→ t

| TIME | 8:00 | 8:01 | 8:02 | 8:03 | 8:04 | 8:05 | 8:06 | 8:07 | 8:08 | ... |
|---|---|---|---|---|---|---|---|---|---|---|
| SHOWCASE GR. 1 | 1 | 2 | 3 | 4 | 0 | −1 | −2 | −3 | −4 | |
| GR. 1 TEMP. DIFF. | a | b | b | b | c | c | b | b | a | |
| SHOWCASE GR. 2 | 0 | −1 | −2 | 0 | 1 | 2 | 3 | 4 | 5 | |
| GR. 2 TEMP. DIFF. | a | a | a | a | a | b | b | b | c | |
| SHOWCASE GR. 3 | 0 | 1 | 2 | 3 | 4 | 5 | 0 | −1 | −2 | |
| GR. 3 TEMP. DIFF. | a | b | b | c | c | c | c | c | b | |
| SHOWCASE GR. 4 | 0 | 1 | 2 | 3 | 0 | −1 | −2 | −3 | −4 | |
| GR. 4 TEMP. DIFF. | b | b | c | c | c | b | b | b | a | |
| OUTDOOR UNIT 1 | ON | ON | ON | ON | ON | ON | ON | OFF | OFF | |
| OUTDOOR UNIT 2 | ON | ON | ON | ON | OFF | OFF | OFF | OFF | OFF | |
| CONSUMED ELECTRIC POWER AMOUNT | 4 | 11 | 13 | 16 | 10 | 13 | 20 | 18 | 22 | |
| VALIDITY FLAG | 1 | 1 | 1 | 1 | 1 | 1 | 1 | 1 | 1 | |

← [ HISTORY POSITION SEARCH DIRECTION ]

# FIG.5

START

ACQUIRE ELECTRIC POWER AMOUNT VALUE — S101

CALCULATE ACCUMULATED ELECTRIC POWER — S102

ACQUIRE TIME — S103

ACQUIRE OPERATION STATES OF APPLIANCES (OPERATION STATES AND INTERIOR TEMPERATURES OF SHOWCASES, OPERATION STATES OF AIR CONDITIONER OUTDOOR UNITS) — S104

SEARCH INFORMATION TABLE TO IDENTIFY HISTORY POSITION — S105

HISTORY POSITION IDENTIFIED? — S106

YES

MORE THAN ONE HISTORY POSITION EXISTS? — S108

NO

YES

IDENTIFY HISTORY POSITION CLOSEST TO CURRENT MOMENT — S110

S107
PREDICT USING DIFFERENCE BETWEEN IMMEDIATELY PREVIOUS CONSUMED ELECTRIC POWER AMOUNT AND CURRENT CONSUMED ELECTRIC POWER AMOUNT

S109
PREDICT USING ELECTRIC POWER AMOUNT AFTER HISTORY POSITION

S111
PREDICT USING ELECTRIC POWER AMOUNT AFTER HISTORY POSITION

RESTRICT OR CONTROL OPERATION OF APPLIANCES BASED ON PREDICTED VALUE — S112

ADD OPERATION STATES ETC. OF APPLIANCE AT CURRENT MOMENT TO INFORMATION TABLE — S113

END

# FIG.6

| TIME ZONE | SHOWCASES AS A WHOLE | | SHOWCASE NO. 1 | | SHOWCASE NO. 2 | | AIR CONDITIONER | | | | OUTDOOR UNIT | CONSUMED ELECTRIC POWER AMOUNT | | | |
|---|---|---|---|---|---|---|---|---|---|---|---|---|---|---|---|
| | NSB | DSB | DEFROSTING | PULL-DOWN | DEFROSTING | PULL-DOWN | COOLING | HEATING | DRYING | THERMO | | AVERAGE VALUE (kW) | AVERAGE NUMBER OF TIMES | MAXIMUM VALUE (kW) | RECORDING DATE |
| 0:00 to 2:00 | ON | OFF | OFF | OFF | OFF | OFF | ON | OFF | OFF | OFF | ON | 1500 | 10 | 1750 | 2005. 3. 1 |
| 0:00 to 2:00 | ON | OFF | OFF | OFF | OFF | OFF | ON | OFF | OFF | ON | ON | | | | |
| 0:00 to 2:00 | ON | OFF | OFF | OFF | ON | OFF | ON | OFF | OFF | OFF | ON | | | | |
| 0:00 to 2:00 | ON | OFF | OFF | OFF | OFF | ON | ON | OFF | OFF | OFF | ON | | | | |
| 2:00 to 4:00 | ON | OFF | OFF | OFF | OFF | OFF | ON | OFF | OFF | OFF | ON | | | | |
| ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ |

OPERATION STATE PATTERN

EP 1 729 223 A2

# FIG.7

```
        ┌─────────┐
        │  START  │
        └────┬────┘
             │           S200
  ┌─────►┌────▼────┐
  │      │LEARNING │
  │      │PROCESS  │
  │      └────┬────┘
  │           │           S300
  │      ┌────▼────┐
  │      │PREDICTION│
  │      │PROCESS  │
  │      └────┬────┘
  │           │           S400
  │      ┌────▼────┐
  │      │ DEMAND  │
  │      │ CONTROL │
  │      │ PROCESS │
  │      └────┬────┘
  └───────────┘
```

# FIG.8

START

ACQUIRE OPERATION
STATES AND CONSUMED
ELECTRIC POWER AMOUNT
OF LOAD APPLIANCES — S201

ACQUIRE TIME — S202

CHECK TIME ZONE — S203

SAME DATA EXISTS? — S204

NO

YES

SELECT AN
EXISTING ROW — S205

ADD A NEW ROW — S206

UPDATE AVERAGE INCREASE
IN CONSUMED ELECTRIC
POWER AMOUNT, AVERAGE
NUMBER OF TIMES, MAXIMUM
INCREASE IN CONSUMED
ELECTRIC POWER AMOUNT,
AND RECORDING DATE — S207

END

# FIG.9

START

ACQUIRE OPERATION STATES AND CONSUMED ELECTRIC POWER AMOUNT OF LOAD APPLIANCES — S301

ACQUIRE TIME — S302

CHECK TIME ZONE — S303

SAME DATA EXISTS? — S304
NO
YES

PERIOD REMAINING TO TIME SPAN END 10 MINUTES OR LESS? — S305
NO
YES

TAKE MAXIMUM INCREASE IN CONSUMED ELECTRIC POWER AMOUNT AS INCREASE — S307

TAKE AVERAGE INCREASE IN CONSUMED ELECTRIC POWER AMOUNT AS INCREASE — S308

TAKE INCRASE IN ACUIQRED ELECTRIC POWER AMOUNT AS INCREASE — S306

PREDICTED CONSUMED ELECTRIC POWER AMOUNT = (INCREASE /PREDICTION PERIOD) × REMAINING PERIOD + ACCUMULATED ELECTRIC POWER AMOUNT — S309

END

# FIG.10

```
        ┌─────────┐
        │  START  │
        └─────────┘
             │
             ▼                          S401
         ╱───────────╲
        ╱  PREDICTED  ╲
       ╱  CONSUMED ELECTRIC ╲
      ╱  POWER  AMOUNT >      ╲  NO
      ╲  CONTRACTED ELECTRIC  ╱────────────────────────┐
       ╲  POWER AMOUNT?      ╱                         │
        ╲───────────╱                                  │
             │ YES                                      │
             │          S402                            │
             ▼                                          │
         ╱───────────╲                                  │
        ╱   ALL AIR   ╲  NO                             │
        ╲ CONDITIONERS ╱───────────────┐               │
        ╲  STOPPED?   ╱                 │               │
         ╲─────────╱                    │               │
             │ YES      S403            ▼   S404        │
             ▼                   ┌──────────────┐       │
    ┌──────────────────────┐     │  STOP AIR    │       │
    │ SOUND WARNING BUZZER │     │ CONDITIONERS │       │
    └──────────────────────┘     └──────────────┘       │
             │                          │               │
             ▼◄─────────────────────────┴───────────────┘
        ┌─────────┐
        │   END   │
        └─────────┘
```

# FIG.11

EP 1 729 223 A2

| TIME | | 8:00 | 8:01 | 8:02 | 8:03 | 8:04 | 8:05 | 8:06 | 8:07 | 8:08 | ・・・ |
|---|---|---|---|---|---|---|---|---|---|---|---|
| SHOWCASE NO. 1 | DEFROSTING | 0 | 1 | 1 | 1 | 1 | 1 | 0 | 0 | 0 | |
| | DRAINING | 0 | 0 | 0 | 0 | 0 | 0 | 1 | 1 | 1 | |
| | PULL-DOWN | 0 | 0 | 0 | 0 | 0 | 0 | 0 | 0 | 0 | |
| SHOWCASE NO. 2 | DEFROSTING | 0 | 0 | 0 | 0 | 0 | 0 | 0 | 0 | 0 | |
| | DRAINING | 1 | 1 | 0 | 0 | 0 | 0 | 0 | 0 | 0 | |
| | PULL-DOWN | 0 | 0 | 1 | 1 | 1 | 1 | 1 | 1 | 1 | |
| SHOWCASE NO. 3 | DEFROSTING | 0 | 0 | 0 | 0 | 0 | 0 | 0 | 0 | 0 | |
| | DRAINING | 0 | 0 | 0 | 0 | 0 | 0 | 0 | 0 | 0 | |
| | PULL-DOWN | 1 | 1 | 1 | 1 | 1 | 1 | 1 | 0 | 0 | |
| CONSUMED ELECTRIC POWER AMOUNT | | 15 | 18 | 19 | 19 | 21 | 20 | 13 | 11 | 9 | |

# FIG.12

EP 1 729 223 A2

| TIME ZONE | SHOWCASE NO. 1 | | | SHOWCASE NO. 2 | | | SHOWCASE NO. 3 | | | CONSUMED ELECTRIC POWER AMOUNT | | | |
|---|---|---|---|---|---|---|---|---|---|---|---|---|---|
| | DEFROSTING | DRAINING | PULL-DOWN | DEFROSTING | DRAINING | PULL-DOWN | DEFROSTING | DRAINING | PULL-DOWN | AVERAGE VALUE (kW) | AVERAGE NUMBER OF TIMES | MAXIMUM VALUE (kW) | RECORDING DATE |
| 0:00 to 2:00 | ON | OFF | OFF | OFF | OFF | OFF | OFF | OFF | OFF | 1500 | 10 | 1750 | 2005. 3. 1 |
| 0:00 to 2:00 | OFF | ON | OFF | OFF | OFF | OFF | OFF | OFF | OFF | | | | |
| 0:00 to 2:00 | OFF | OFF | ON | ON | OFF | OFF | ON | OFF | OFF | | | | |
| 0:00 to 2:00 | OFF | OFF | OFF | OFF | ON | OFF | OFF | ON | OFF | | | | |
| 2:00 to 4:00 | OFF | OFF | OFF | OFF | OFF | ON | OFF | OFF | ON | | | | |
| ⋮ | ⋮ | ⋮ | ⋮ | ⋮ | ⋮ | ⋮ | ⋮ | ⋮ | ⋮ | ⋮ | ⋮ | ⋮ | ⋮ |

# FIG.13

```
           START
             │
             ▼
      ┌──────────────┐          S500
      │    READ      │
      │  DEFROSTING  │
      │   SCHEDULE   │
      └──────────────┘
             │
      ┌──────▼───────┐          S200
      │   LEARNING   │
      │   PROCESS    │
      └──────────────┘
             │
      ┌──────▼───────┐          S300
      │  PREDICTION  │
      │   PROCESS    │
      └──────────────┘
             │
      ┌──────▼───────┐          S400
      │   DEMAND     │
      │   CONTROL    │
      │   PROCESS    │
      └──────────────┘
```

# FIG.14

START

ACQUIRE TIME ⟋ S202

CHECK TIME ZONE ⟋ S203

REFER TO OPERATION STATE
MODEL&EXTRACT CURRENT
OPERATION STATES OF APPLIANCES ⟋ S210

ACQUIRE CONSUMED
ELECTRIC POWER AMOUNT ⟋ S211

MEMORIZE EXTRACTED DATA
AND ELECTRIC POWER AMOUNT
(CREATE FIRST TABLE) ⟋ S212

SAME DATA EXISTS
IN SECOND TABLE? ⟋ S213

NO

YES

SELECT AN EXISTING ROW
IN SECOND TABLE ⟋ S214

ADD A NEW ROW
IN SECOND TABLE ⟋ S215

UPDATE AVERAGE INCREASE IN
CONSUMED ELECTRIC POWER AMOUNT,
AVERAGE NUMBER OF TIMES,MAXIMUM
INCREASE IN CONSUMED ELECTRIC
POWER AMOUNT,AND RECORDING DATE
(SECOND TABLE) ⟋ S216

END

# FIG.15

```
┌─────────────┐
│    STRAT    │
└─────────────┘
       │              S302
       ▼
┌─────────────┐
│ ACQUIRE TIME│
└─────────────┘
       │              S303
       ▼
┌──────────────────┐
│  CHECK TIME ZONE │
└──────────────────┘
       │              S310
       ▼
┌─────────────────────────┐
│ READ CONSUMED ELECTRIC  │
│ POWER AMOUNT FROM MEMORY│
│ (REFERRING TO FIRST TABLE)│
└─────────────────────────┘
       │              S311
       ▼
┌─────────────────────────┐
│   CALCULATE LINEARLY    │
│  PREDICTED VALUE P (BASED│
│  ON INCREASE) & SET i AT 29│
└─────────────────────────┘
       │
       ▼
┌─────────────────────────┐     S312
│  READ OPERATION STATES  │
│  OF APPLIANCES ETC. FROM │
│  MEMORY(REFERRING TO     │
│     FIRST TABLE)         │
└─────────────────────────┘
```

Predicted increase in consumed electric power amount:

S304: SAME DATA EXISTS IN SECOND TABLE? — NO / YES

S305: PERIOD REMAINING TO TIME SPAN END 10 MINUTES OR LESS? — NO / YES

S314: Q = MAXIMUM INCREASE IN CONSUMED ELECTRIC POWER AMOUNT

S315: Q = AVERAGE INCREASE IN CONSUMED ELECTRIC POWER AMOUNT

S313: $Q = P$

S316: PREDICTED INCREASE IN CONSUMED ELECTRIC POWER AMOUNT $POW_i = P + \alpha (Q - P)$

S317: $i - -$ / $i \geq$ CURRENT TIME? — YES / NO

S318: PREDICTED INCREASE IN CONSUMED ELECTRIC POWER AMOUNT

$$= \sum_{i=29}^{CurrentTime} POW_i$$

```
┌─────────┐
│   END   │
└─────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7143670 A